(19) **Europäisches Patentamt / European Patent Office / Office européen des brevets**

(11) **EP 4 305 621 B1**

(12) **EUROPEAN PATENT SPECIFICATION**

(45) Date of publication and mention
of the grant of the patent:
**29.04.2026 Bulletin 2026/18**

(21) Application number: **22711826.2**

(22) Date of filing: **09.03.2022**

(51) International Patent Classification (IPC):
**G10L 21/0208** (2013.01)   **G01H 7/00** (2006.01)
**H04M 9/08** (2006.01)   **G10L 25/03** (2013.01)

(52) Cooperative Patent Classification (CPC):
**G10L 21/0208; G01H 7/00; H04M 9/082;**
G10L 25/03; G10L 2021/02082

(86) International application number:
**PCT/US2022/019624**

(87) International publication number:
**WO 2022/192452 (15.09.2022 Gazette 2022/37)**

(54) **IMPROVING PERCEPTUAL QUALITY OF DEREVERBERATION**

VERBESSERUNG DER WAHRNEHMBAREN ENTSCHALLUNGSQUALITÄT

AMÉLIORATION DE LA QUALITÉ PERCEPTUELLE D'UNE DÉRÉVERBÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2021 PCT/CN2021/080214
07.04.2021 US 202163171620 P
20.05.2021 EP 21174907**

(43) Date of publication of application:
**17.01.2024 Bulletin 2024/03**

(73) Proprietor: **Dolby Laboratories Licensing
Corporation
San Francisco, CA 94103 (US)**

(72) Inventors:
• **MA, Yuanxing**
  **San Francisco, California 94103 (US)**
• **LI, Kai**
  **San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**EP-A1- 2 624 254   EP-A2- 1 667 416
EP-A2- 2 573 768**

**Description**

**CROSS-REFERENCE TO RELATED APPLICATIONS**

This application claims the benefit of International Patent Application PCT/CN2021/080214 filed 11 March 2021; U.S. Provisional Application No. 63/171,620 filed 7 April 2021, and European Patent Application No. 21174907.2 filed 20 May 2021.

**TECHNICAL FIELD**

This disclosure pertains to systems, methods, and media for dereverberation.

**BACKGROUND**

Audio devices, such as headphones, speakers, etc. are widely deployed. People frequently listen to audio content (e.g., podcasts, radio shows, television shows, music videos, user-generated content, short-video, video meetings, teleconferencing meetings, panel discussions, interviews, etc.) that may include reverberation. Dereverberation may be performed on such audio content. However, dereverberation may produce unwanted perceptual effects, such as reduced loudness and other changes in perceptual quality.

EP 2 573 768 A2 is about audio dereverberation. An initial gain determined on SRR (signal-to-reverberation ratio) is corrected based on actual power signal decay rate statistics of actual signal frames.

EP 1 667 416 A2 is about audio dereverberation. It corrects a subband dereverberation gain as a function of the band being determined as a "non-reverberant frequency band" or a "reverberant frequency band".

EP 2 624 254 A1 is about audio dereverberation. A gain correction is determined as a function of a determined reverb amount.

**NOTATION AND NOMENCLATURE**

Throughout this disclosure, including in the claims, the terms "speaker," "loudspeaker" and "audio reproduction transducer" are used synonymously to denote any sound-emitting transducer (or set of transducers) driven by a single speaker feed. A typical set of headphones includes two speakers. A speaker may be implemented to include multiple transducers (e.g., a woofer and a tweeter), which may be driven by a single, common speaker feed or multiple speaker feeds. In some examples, the speaker feed(s) may undergo different processing in different circuitry branches coupled to the different transducers.

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

Throughout this disclosure including in the claims, the term "couples" or "coupled" is used to mean either a direct or indirect connection. Thus, if a first device couples to a second device, that connection may be through a direct connection, or through an indirect connection via other devices and connections.

Throughout this disclosure including in the claims, the term "resonance" refers to a phenomenon where particular frequencies of a sound impulse take longer to die out than other frequencies of the sound impulse. The frequencies that have energy for a longer duration of time may be referred to as "resonant frequencies." Resonance, or which frequencies are resonant, may depend on room characteristics, such as a size of the room, objects in the room, materials used in the walls or ceiling of the room, etc. For example, room resonances may occur when certain wavelengths of specific audio frequencies correlate to fundamental resonances of a room. These audio frequencies may boom and produce longer release times. These acoustic effects may be generated by standing waves, which may be generated between parallel surfaces in the room.

Throughout this disclosure including in the claims, the term "reverberation" refers to a phenomena where sound persists after production of the sound. Reverberation is due to reflections of the sound off of objects, such as objects located in a room the sound is produced in, walls, ceilings, etc. Reverberant speech has an "attack phase," and a "release phase." As used herein, "attack phase" refers to the portion of reverberant speech in an audio signal in which the reverberation is increasing. That is, the attack phase corresponds to the beginning of reverberation to the time point at which reverberation is at a maximum. As used herein, "release phase" refers to the portion of reverberant speech in an audio signal in which the reverberation is decreasing. That is, the release phase corresponds to the time point at which reverberation is at a maximum to the time point at which reverberation ends.

**SUMMARY**

The invention is as defined in appended independent claims 1, 14 and 15. Preferred embodiments are set forth in the dependent claims.

At least some aspects of the present disclosure may be implemented via methods. Some methods may involve receiving an input audio signal. The input audio signal includes a plurality of frames. The method involves calculating an initial reverberation suppression gain for the input audio signal for at least one frame of the plurality of frames. Tue method involve calculating at least one adjusted reverberation suppression gain for the at least one frame of the input audio signal. The at least one adjusted reverberation suppression gain is based on the initial reverberation suppression gain. The at least one adjusted reverberation suppression gain adjusts at least one of: 1) a reverberation suppression decay based on a reverberation intensity detected in the input audio signal; 2) gains applied to different frequency bands of the input audio signal based on an amount of room resonance detected in the input audio signal; or 3) a loudness of the input audio signal based on an effect of the initial reverberation suppression gain on a direct part of the input audio signal. The method involves generating an output audio signal by applying the at least one adjusted reverberation suppression gain to the at least one frame of the input audio signal. Accordingly, at least one frame of the plurality of frames may include at least two frames.

In some examples, an at least one adjusted reverberation suppression gain may adjust the reverberation suppression decay. Calculating the at least one adjusted reverberation suppression gain may involve calculating a reverberation intensity for at least one frame of the plurality of frames of an input audio signal. Calculating the at least one adjusted reverberation suppression gain may further involve calculating a reverberation decay time constant for the at least one frame of the plurality of frames of the input audio signal based on the corresponding reverberation intensity. Calculating the at least one adjusted reverberation suppression gain may further involve calculating the at least one adjusted reverberation suppression gain based on the reverberation decay time constant for the at least one frame of the plurality of frames of the input audio signal. In some examples, a reverberation decay time constant for the at least one frame of the plurality of frames of the input audio signal may be based on a determination of whether the input audio signal corresponds to an attack phase of reverberant speech or a release phase of reverberant speech. In some examples, a reverberation decay time constant may be calculated for a plurality of frequency bands of the input audio signal. In some examples, a reverberation decay time constant is smoothed across the plurality of frequency bands. Accordingly, a decay of the reverberation suppression gain is adjusted.

In some examples, an at least one adjusted reverberation suppression gain adjusts gain applied to different frequency bands of an input audio signal may be based on an amount of room resonance detected in the input audio signal. Calculating the at least one adjusted reverberation suppression gain may involve dividing the input audio signal into a plurality of frequency bands. Calculating the at least one adjusted reverberation suppression gain may further involve, for each frequency band of the plurality of frequency bands, calculating an amount of room resonance present in the input audio signal at the frequency band. Calculating the at least one adjusted reverberation suppression gain may further involve calculating the at least one adjusted reverberation suppression gain for each frequency band based on the amount of room resonance present in the input audio signal at the frequency band. In some examples, calculating the amount of room resonance present in the input audio signal at the frequency band may involve calculating a Signal to Reverberant energy Ratio (SRR) for each frequency band. In some examples, the amount of room resonance may be calculated as greater than 0 for a frequency band of the plurality of frequency bands in response to determining that the SRR for the frequency band is below a threshold. In some examples, the amount of room resonance of a frequency band of the plurality of frequency bands may be calculated based on an activation function applied to the SRR at the frequency band. In some examples, the at least one adjusted reverberation suppression gain for each frequency band may be based on a scaled value of the amount of room resonance at each frequency band and for the at least one frame of the plurality of frames of the input audio signal. In some examples, the at least one adjusted reverberation suppression gain for each frequency band may be based on a scaled value of an average amount of room resonance at each frequency band averaged across a plurality of frames of the input audio signal.

In some examples, an at least one adjusted reverberation suppression gain adjusts the loudness of an input audio signal based on the effect of an initial reverberation suppression gain on a direct part of the input audio signal. In some examples, calculating the at least one adjusted reverberation suppression gain may involve selecting initial reverberation suppression gains for frames of the input audio signal that exceed a threshold. In some examples, calculating the at least one adjusted reverberation suppression gain may further involve estimating statistics associated with the direct part of the input audio signal for the frames of the input audio signal based on the selected initial reverberation suppression gains, where the at least one adjusted reverberation suppression gain is based on the estimated statistics associated with the direct part of the input audio signal. In some examples, a method may further involve calculating smoothed initial reverberation suppression gains based on the selected initial reverberation suppression gains. In some examples, the estimated statistics associated with the direct part of the input audio signal may include estimated gains applied to the direct part of the input audio signal. In some examples, the estimated gains applied to the direct part of the input audio signal may be based on the smoothed initial reverberation suppression gains. In some examples, calculating smoothed initial reverberation suppression gains may involve applying a one-pole smoothing to the selected initial reverberation suppression gains. In some examples, the at least one adjusted reverberation suppression gain may be calculated by comparing the estimated gains applied to the direct part of the input audio signal to a target gain. In some examples, the estimated statistics associated with the direct part of the input audio signal may include smoothed loudness levels of the direct part of the input audio signal for the frames of the input audio signal based on the selected initial reverberation suppression gains. In some examples, the at least one adjusted reverberation suppression gain may be calculated by comparing the smoothed loudness levels of the direct part of the input audio signal to a target loudness level.

Some or all of the operations, functions and/or methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. Accordingly, some innovative aspects of the subject matter described in this disclosure can be implemented via one or more non-transitory media having software stored thereon.

At least some aspects of the present disclosure may be implemented via an apparatus. For example, one or more devices may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

## BRIEF DESCRIPTION OF THE DRAWINGS

Figures 1A and 1B illustrate representations of example audio signals that include reverberation.

Figure 2 shows a block diagram of an example system for improving perceptual quality of dereverberation in accordance with some implementations.

Figure 3 shows an example of a process for improving perceptual quality of dereverberation in accordance with some implementations.

Figure 4 shows an example of a process for calculating adjusted reverberation suppression gains by adjusting reverberation suppression decay in accordance with some implementations.

Figure 5 shows an example of a process for calculating adjusted reverberation suppression gains based on room resonance in accordance with some implementations.

Figures 6A and 6B show examples processes for calculating adjusted reverberation suppression gains to compensate loudness in accordance with some implementations.

Figure 7 shows an example of a process for determining a Signal to Reverberant energy Ratio (SRR) in accordance with some implementations.

Figure 8 shows a block diagram that illustrates examples of components of an apparatus capable of implementing various aspects of this disclosure.

Like reference numbers and designations in the various drawings indicate like elements.

## DETAILED DESCRIPTION OF EMBODIMENTS

Reverberation occurs when an audio signal is distorted by various reflections off of various surfaces (e.g., walls, ceilings, floors, furniture, etc.). Reverberation may have a substantial impact on sound quality and speech intelligibility. Accordingly, dereverberation of an audio signal may be performed, for example, to improve speech intelligibility and clarity.

Sound arriving at a receiver (e.g., a human listener, a microphone, etc.) is made up of direct sound, which includes sound directly from the source without any reflections, and reverberant sound, which includes sound reflected off of various surfaces in the environment. The reverberant sound includes early reflections and late reflections. Early reflections may reach the receiver soon after or concurrently with the direct sound, and may therefore be partially integrated into the direct sound. The integration of early reflections with direct sound creates a spectral coloration effect which contributes to a perceived sound quality. The late reflections arrive at the receiver after the early reflections (e.g., more than 50-80 milliseconds after the direct sound). The late reflections may have a detrimental effect on speech intelligibility. Accordingly, dereverberation may be performed on an audio signal to reduce an effect of late reflections present in the audio signal to thereby improve speech intelligibility.

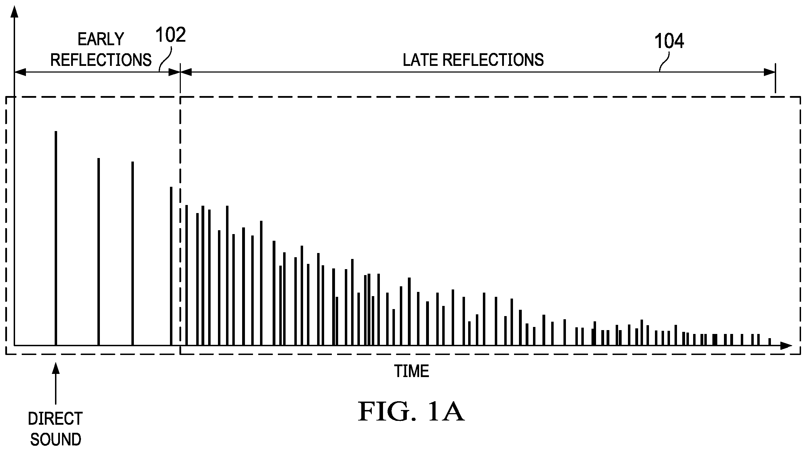

Figure 1A shows an example of acoustic impulse responses in a reverberant environment. As illustrated, early reflections 102 may arrive at a receiver concurrently or shortly after a direct sound. By contrast, late reflections 104 may arrive at the receiver after early reflections 102.

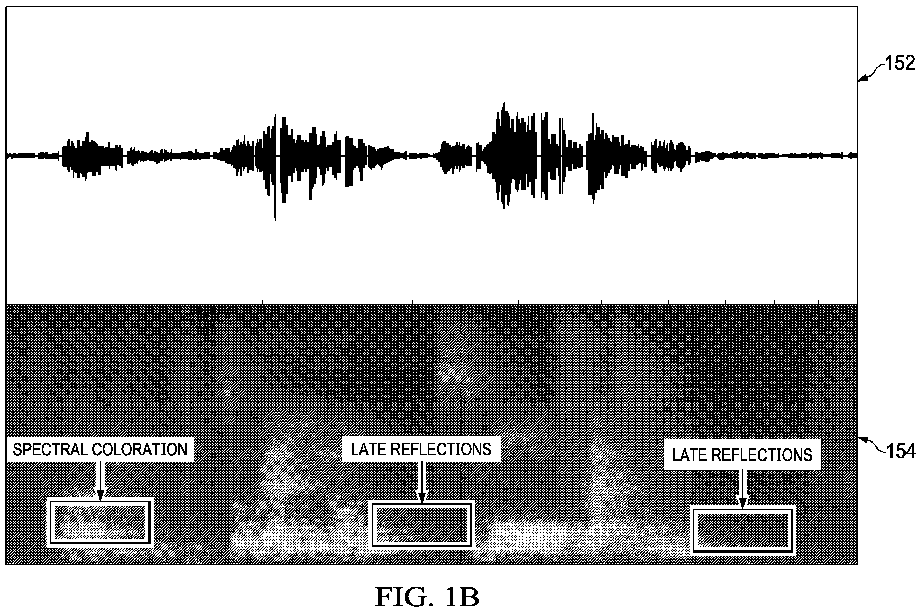

Figure 1B shows an example of a time domain input audio signal 152 and a corresponding spectrogram 154. As illustrated in spectrogram 154, early reflections may produce changes in spectrogram 154 as depicted by spectral colorations 156.

In some implementations, when dereverberation is performed on an audio signal, the dereverberation may reduce audio quality. For example, dereverberation may cause a loudness of a direct part of the audio signal to be reduced, thereby causing the direct part of the audio signal in the dereverberated audio signal to not sound like a near field capture. As another example, dereverberation may cause sound quality changes (e.g., timbre changes) in audio signals that include room resonance. As a more particular example, dereverberation may decrease energy in particular frequency bands that correspond to resonant frequencies of the room, which may cause the timbre of the dereverberated signal to change in an undesirable manner. As yet another example, dereverberation may cause late reflections to be oversuppressed. Over suppression of late reflections (e.g., from longer reverberation times), may cause perceptual continuity issues in the dereverberated signal.

In some implementations, methods, systems, apparatuses, and media for improving perceptual quality of dereverberation are provided. For example, an initial reverberation suppression gain can be calculated for an input audio signal. Continuing with this example, one or more adjusted reverberation suppression gains can be calculated for the input audio signal based on content of the input audio signal and/or the initial reverberation suppression gain. In some implementations, the one or more adjusted reverberation suppression gains may effectively suppress reverberation while improving a perceptual quality with respect to one or more sound characteristics.

For example, the one or more adjusted reverberation suppression gains can adjust a reverberation suppression decay based on a reverberation time detected in the input audio signal. As a more particular example, the reverberation decay time can be adjusted based on reverberation intensity and/or reverberation time, thereby achieving better reverberation suppression when reverberation time is short while maintaining perceptual experience when reverberation time is long. As another example, the one or more reverberation suppression gains can adjust a gain applied to different frequency bands of the input audio signal based on an amount of room resonance detected at the frequency bands of the input audio signal, thereby preserving a spectral color of the input audio signal that depends on the resonance frequencies of the room. As yet another example, the one or more reverberation suppression gains can adjust a loudness of the input audio signal based on an effect of the initial reverberation suppression gain, thereby boosting a loudness of the direct part of the input audio signal. It should be noted that any of the one or more adjusted reverberation suppression gains can be calculated in any combination.

The one or more adjusted reverberation suppression gains can then be applied to the input audio signal to generate an output audio signal that has been dereverberated while maintaining various perceptual qualities, such as loudness, spectral color, and perceptual continuity.

In some implementations, an initial reverberation suppression gain may be calculated using various techniques. For example, in some implementations, the initial reverberation suppression gain may be calculated based on amplitude modulation of the input audio signal at various frequency bands. As a more particular example, in some embodiments, a time domain audio signal can be transformed into a frequency domain signal. Continuing with this more particular example, the frequency domain signal can be divided into multiple subbands, e.g., by applying a filterbank to the frequency domain signal. Continuing further with this more particular example, amplitude modulation values can be determined for each subband, and bandpass filters can be applied to the amplitude modulation values. In some implementations, the bandpass filter values may be selected based on a cadence of human speech, e.g., such that a central frequency of a bandpass filter exceeds the cadence of human speech (e.g., in the range of 10-20 Hz, approximately 15 Hz, or the like). Continuing still further with this particular example, initial reverberation suppression gains can be determined for each subband based on a function of the amplitude modulation signal values and the bandpass filtered amplitude modulation values. In some implementations, the techniques described in United States Patent No. 9,520, 140 may be used to calculate initial reverberation suppression gains.

As another example, in some implementations, initial reverberation suppression gains may be calculated by estimating a dereverberated signal using a deep neural network, a weighted prediction error method, a variance-normalized delayed linear prediction method, a multichannel linear filter, or the like. As yet another example, in some implementations, initial reverberation suppression gains may be calculated by estimating a room response and performing a deconvolution operation on the input audio signal based on the room response.

It should be noted that the techniques described herein for improving perceptual quality of dereverberation may be performed on various types or forms of audio content, including but not limited to podcasts, radio shows, audio content associated with video conferences, audio content associated with television shows or movies, and the like. The audio content may be live or pre-recorded.

Additionally, it should be noted that the techniques described herein may be performed for an input audio signal that includes multiple frames of audio content. The techniques may be performed on multiple frames, or on a frame-by-frame basis.

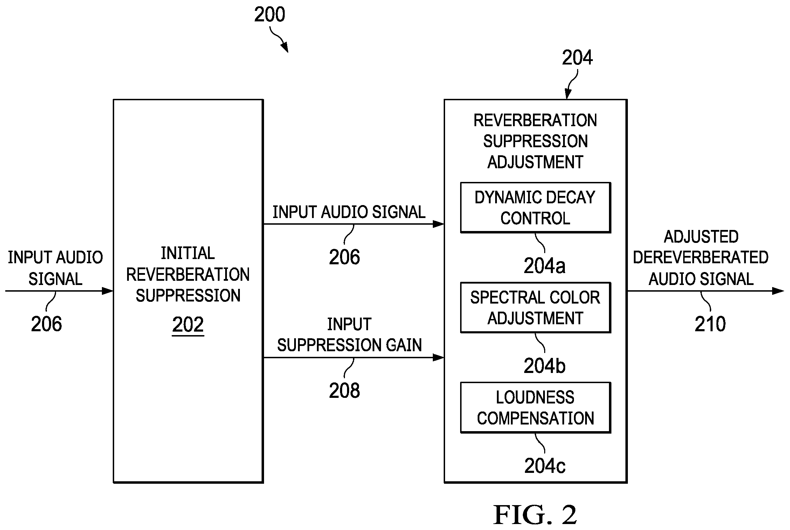

Figure 2 shows a block diagram of an example system 200 for improving perceptual quality of dereverberation in accordance with some implementations.

As illustrated, system 200 can include an initial reverberation suppression component 202. Initial reverberation suppression component 202 can receive, as an input, an input audio signal 206. Input audio signal 206 may include audio content such as a podcast, a radio show, audio content associated with a television show, audio content associated with a movie or video, audio content associated with a teleconference or video conference, and the like. The audio content may be live or pre-recorded.

Initial reverberation suppression component 202 can generate an initial suppression gain 208 that indicates an initial calculation of a reverberation suppression gain that is to be applied to input audio signal 206. Initial reverberation suppression component 202 can calculate initial suppression gain 208 using any suitable dereverberation technique. For example, initial suppression gain 208 can be calculated based on amplitude modulation information of input audio signal 206 at various frequency bands, using a neural network (e.g., a deep neural network, etc.), based on an estimated room impulse response, and the like.

A reverberation suppression adjustment component 204 can take, as inputs, input audio signal 206 and/or initial suppression gain 208, and can generate an adjusted dereverberated audio signal 210. In some implementations, reverberation suppression adjustment component 204 can generate adjusted dereverberated audio signal 210 by calculating one or more adjustments to initial suppression gain 208. For example, reverberation suppression adjustment component 204 can calculate one or more adjusted suppression gains. Continuing with this example, the one or more adjusted suppression gains can be combined to generate an aggregate adjusted suppression gain. As a more particular example, in some implementations, the aggregate adjusted suppression gain can be calculated by adding the one or more adjusted suppression gains. Reverberation suppression adjustment component 204 can then apply the aggregate adjusted suppression gain to input audio signal 206 to generate adjusted dereverberated audio signal 210.

In some implementations, one or more adjusted suppression gains may be calculated by sub-components of reverberation suppression adjustment component 204, such as dynamic decay control component 204a, spectral color adjustment component 204b, and/or loudness compensation component 204c.

In some implementations, dynamic decay control component 204a may calculate an adjusted suppression gain such that a suppression decay rate is based on reverberation time. It should be noted that reverberation time is correlated with reverberation intensity, such that higher amounts of reverberation intensity correlate with longer reverberation times.

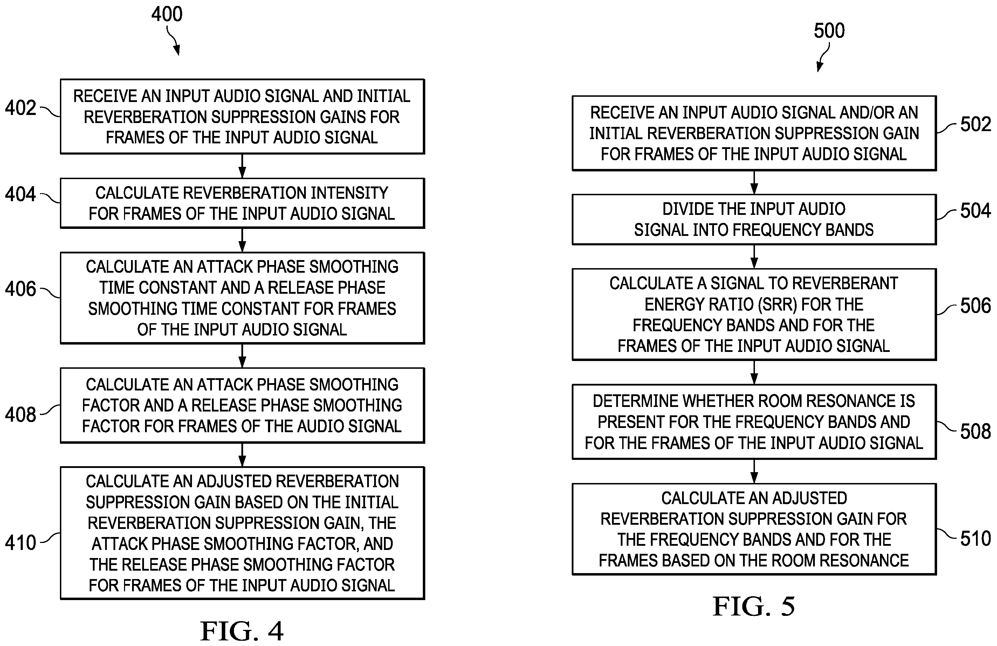

In some implementations, dynamic decay control component 204a may calculate the suppression decay rate such that a time constant associated with the suppression decay rate is relatively longer (e.g., producing a slower suppression decay) for input audio signals with a relatively high reverberation intensity, and, correspondingly, such that the time constant associated with the suppression decay rate is relatively shorter (e.g., producing a faster suppression decay) for input audio signals with a relatively low reverberation intensity. Continuing with this example, dynamic decay control component 204a may apply different suppression decay rates to an input audio signal based on whether reverberation in the input audio signal is in an attack phase or in a release phase. Moreover, dynamic decay control component 204a may generate the adjusted suppression gains by smoothing the initial reverberation suppression gains with smoothing factors that depend on the reverberation intensity of the input audio signal and whether the reverberation is in an attack phase or a release phase. For example, in some implementations, initial reverberation suppression gains may be weighted more for reverberation determined to be in the attack phase and that are determined to be at relatively low reverberation intensities when calculating an adjusted suppression gain by smoothing the initial reverberation suppression gains. Example techniques for calculating an adjusted suppression gain based on reverberation time are shown in and described below in connection with Figure 4.

In some implementations, spectral color adjustment component 204b may calculate an adjusted reverberation suppression gain based on a determined amount of room resonance detected in input audio signal 206. For example, in some implementations, the adjusted reverberation suppression gain can be calculated for various frequency bands of input audio signal 206 such that the adjusted reverberation suppression gain at each frequency band depends on a detected amount of room resonance associated with the corresponding frequency band. By scaling the reverberation suppression gain for different frequency bands based on room resonance, a spectral color of the input audio signal can be preserved in the output dereverberated signal. Example techniques for calculating an adjusted suppression game based on room resonance are shown in and described below in connection with Figure 5.

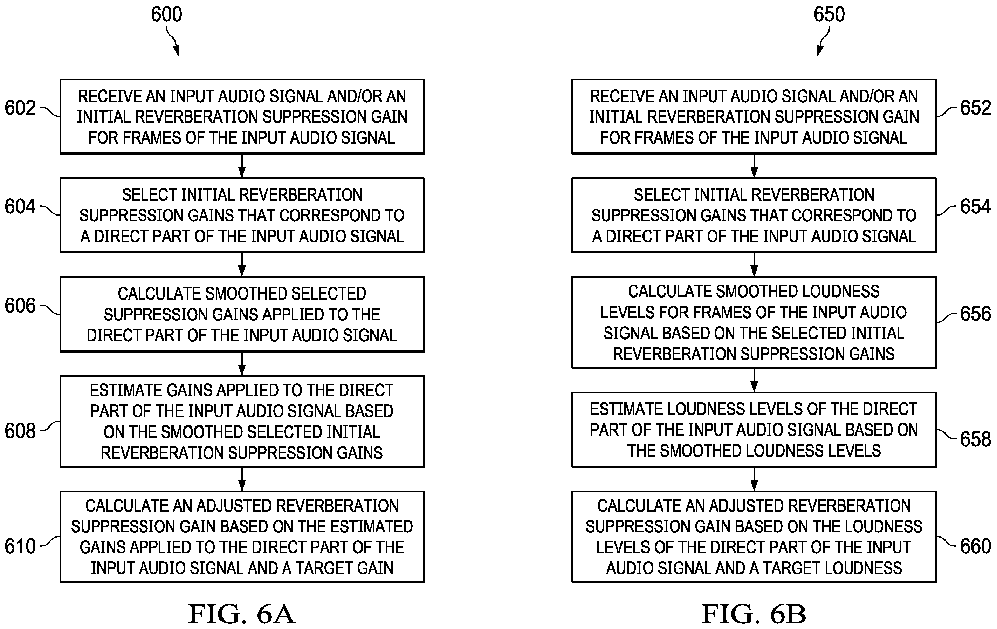

In some implementations, loudness component 204c may calculate an adjusted reverberation suppression gain that adjusts a loudness of a direct part of input audio signal 206. For example, in some implementations, the adjusted reverberation suppression gain may be calculated based on the portions of initial suppression gain 208 that are applied to a direct part of input audio signal 206. As another example, in some implementations, the adjusted reverberation suppression gain may be calculated based on a loudness of a direct part of input audio signal 206. In some implementations, the adjusted reverberation suppression gain may be calculated to achieve a target gain for the direct part of input audio signal 206 or a target loudness of the direct part of input audio signal 206. Example techniques for calculating an adjusted reverberation suppression gain that adjusts the loudness of a direct part of an input audio signal are shown in and described below in connection with Figures 6A and 6B.

By applying one or more adjusted suppression gains to input audio signal 206, adjusted dereverberated audio signal 210 may effectively suppress reverberation while improving perceptual quality relative to a version of input audio signal with initial suppression gain 208 applied. For example, by applying suppression gain based on reverberation time, reverberation corresponding to short reverberation time can be suppressed while mitigating over-suppression of late reflections. As another example, by applying suppression gain based on room resonance, spectral color introduced by room resonance can be preserved. As yet another example, by applying suppression gain based on a target gain or target loudness of a direct part of an audio signal, the loudness of the direct part can be boosted, thereby providing a dereverberated audio signal that is perceptually similar to a near field capture of the input audio signal.

It should be noted that the one or more adjusted suppression gains may be calculated serially or substantially in parallel. In instances in which the one or more adjusted suppression gains are calculated serially, an adjusted suppression gain based on a target gain or target loudness of a direct part of an input audio signal may be calculated last (e.g., after an adjusted suppression gain based on reverberation time and/or after an adjusted suppression gain based on room resonance), thereby allowing gains that adjust loudness to be calculated after other adjustments have been determined.

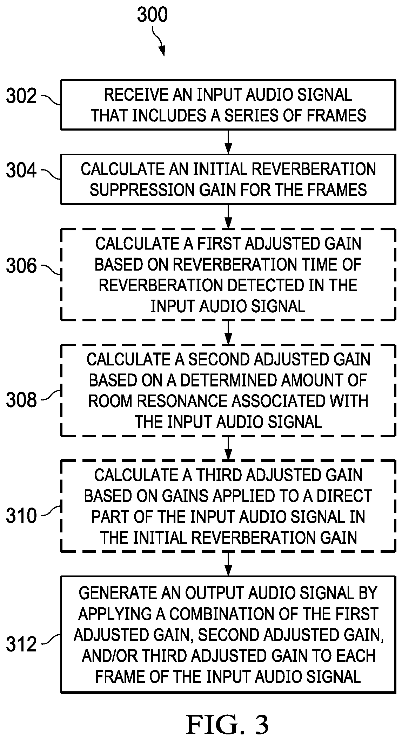

Figure 3 shows an example of a process 300 for improving perceptual quality of dereverberation in accordance with some implementations. In some implementations, blocks of process 300 may be performed in various orders not shown in Figure 3. Additionally, or alternatively, in some implementations, two or more blocks of process 300 may be performed substantially in parallel. Additionally, or alternatively, in some implementations, one or more blocks of process 300 may be omitted.

Process 300 can begin at 302 by receiving an input audio signal. The input audio signal may include a series of frames, where each frame corresponds to a portion of the input audio signal. A particular frame of an input audio signal is represented herein as $n$. A frame may have a duration within a range of about 5 milliseconds - 35 milliseconds, within a range of about 5 milliseconds - 20 milliseconds, etc. For example, a frame may be about 10 milliseconds. The duration of a frame is sometimes represented herein as $T$.

At 304, process 300 can calculate an initial reverberation suppression gain for the frames. The initial reverberation suppression gains for each frame can be calculated using any suitable dereverberation technique(s). For example, the initial reverberation suppression gains can be calculated based on amplitude modulation values of the input audio signal at different frequency bands. As another example, the initial reverberation suppression gains can be calculated based on a machine learning algorithm, such as a deep neural network. As yet another example, the initial reverberation suppression gains can be calculated based on a deconvolution of the input audio signal and an estimated room impulse response.

After performing block 304, process 300 may have a set of initial reverberation suppression gains $g(n)$, where $n$ corresponds to a frame of the input audio signal. It should be noted that a frame $n$ may be associated with multiple reverberation suppression gains. For example, in some embodiments, a frame $n$ may be divided into multiple frequency bands, where different reverberation suppression gains are calculated for different frequency bands.

At 306, process 300 can calculate a first adjusted gain based on reverberation times of reverberation detected in the input audio signal. For example, in some implementations, process 300 can estimate a reverberation intensity at each frame of the input audio signal. Continuing with this example, process 300 can then calculate the first adjusted gain based on the reverberation intensity at each frame and based on whether the reverberation is in an attack phase or in a release phase. The first adjusted gain can be calculated such that a reverberation suppression decay rate depends on the reverberation intensity and/or whether the reverberation is in an attack phase or a release phase. Example techniques for calculating an adjusted gain by adjusting reverberation suppression decay are shown in and described below in connection with Figure 4.

After performing block 306, process 300 may have a first adjusted gain $g\_1(n)$, where $n$ corresponds to a frame of the input audio signal. Note that, in some implementations, block 306 may be omitted. For example, in an instance in which reverberation suppression decay rates are not adjusted, block 306 may be omitted.

At 308, process 300 can calculate a second adjusted gain based on a determined amount of room resonance associated with the input audio signal. For example, in some implementations, process 300 can determine whether there is resonance present, for each frame of the input audio signal and for each frequency band of a set of frequency bands. Continuing with this example, process 300 can then calculate an adjusted gain for each frame and each frequency band based on the detected resonance. Example techniques for calculating an adjusted gain based on room resonance are shown in and described below in connection with Figure 5.

After performing block 308, process 300 may have a second adjusted gain $g\_2(n)$, where $n$ corresponds to a frame of the input audio signal. Note that, in some implementations, block 308 may be omitted. For example, in an instance in which reverberation gain is not to be calculated based on room resonance (e.g., because there is no room resonance detected in the input audio signal), block 308 may be omitted.

At 310, process 300 can calculate a third adjusted gain to compensate loudness of the direct part of the input audio signal due to loudness attenuation as a result of the initial reverberation suppression gains. For example, in some implementations, process 300 can adjust a gain of the direct part of the input audio signal based on a target gain for the direct part of the input audio signal, thereby boosting a loudness of the direct part of the input audio signal. As another example, in some implementations, process 300 can adjust a gain of the direct part of the input audio signal based on a target loudness for the direct part of the input audio signal. Example techniques for calculating an adjusted gain based on the direct part of the input audio signal are shown in and described below in connection with Figures 6A and 6B.

After performing block 310, process 300 may have a third adjusted gain $g\_3(n)$, where $n$ corresponds to a frame of the input audio signal. Note that, in some implementations, block 310 may be omitted. For example, in an instance in which a first adjusted gain $g\_1(n)$ and/or a second adjusted gain $g\_2(n)$ are within a predetermined range of initial reverberation suppression gains $g(n)$, process 300 may determine that a loudness of a direct part of the input audio signal does not need to be adjusted. Accordingly, block 310 may be omitted.

At 312, process 300 can generate an output audio signal by applying a combination of any of the first adjusted gain, second adjusted gain, and/or third adjusted gain (e.g., $g\_1(n)$, $g\_2(n)$, and/or $g\_3(n)$, respectively) to the input audio signal. In some implementations the first adjusted gain, the second adjusted gain, and/or the third adjusted gain can be combined to generate an aggregate adjusted gain to be applied to the input audio signal. For example, in some implementations, the first adjusted gain, the second adjusted gain, and the third adjusted gain can be added to calculate the aggregate adjusted gain. Continuing with this example, the aggregate adjusted gain can then be applied to the input audio signal to generate the dereverberated output audio signal.

Figure 4 shows an example of a process for calculating adjusted reverberation suppression gains by adjusting reverberation suppression decay in accordance with some implementations. In some implementations, blocks of process 400 may be performed in various orders not shown in Figure 4. Additionally, or alternatively, in some implementations, two or more blocks of process 400 may be performed substantially in parallel. Additionally, or alternatively, in some implementations, one or more blocks of process 400 may be omitted.

Process 400 can begin at 402 by receiving an input audio signal and initial reverberation suppression gains for frames of the input audio signal. The input audio signal may have a series of frames, each corresponding to a portion of the input audio signal. As used herein, the frame of the input audio signal is represented as $n$. The initial reverberation suppression gains are represented herein as $g(n)$, where each $g(n)$ indicates an initial reverberation suppression gain for frame $n$ of the input audio signal. Each initial reverberation suppression gain may be calculated using any suitable dereverberation technique or algorithm, for example, as described above in connection with initial reverberation suppression component 202 of Figure 2.

At 404, process 400 can calculate reverberation intensity for frames of the input audio signal. The reverberation intensity for a frame ($n$) is generally represented herein as $r(n)$.

For example, in some implementations, reverberation intensity can be calculated based on a modulation spectrum over a sliding window of frames of the input audio signal. Examples of a time duration of a sliding window may be 0.2 seconds, 0.25 seconds, 0.3 seconds, or the like. As a more particular example, in some implementations, process 400 can calculate a modulation spectrum for the input audio signal which indicates amplitude modulation of various acoustic bands of the input audio signal. The modulation spectrum is a two-dimensional spectrum where the y-axis is frequency and the x-axis modulation frequency. To determine the modulation spectrum, the input audio signal from within the sliding window may be split into multiple frequency bands (e.g., 8 frequency bands, or the like) to determine a time-frequency spectrum. For each frequency band, band energies may be determined within the sliding window and transformed to the frequency domain to determine a modulation frequency-frequency spectrum. Process 400 can determine the reverberation intensity based on energy distribution across different bands of the modulation spectrum. As a specific example, the band with the largest amount of energy can be selected, and spectral tilt can be calculated over the selected band with the largest amount of energy. The spectral tilt can be calculated using a linear regression of the modulation band energies indicated in the modulation spectrum, where the estimated slope calculated by the linear regression is taken as the spectral tilt of the respective frame. The reverberation intensity $r(n)$ can be calculated as $r(n) = 1 + c * k(n)$, where $k(n)$ is the estimated slope for frame $n$ calculated by the linear regression, and c is a scaling factor that normalizes $r(n)$ between 0 and 1.

As another example, in some implementations, reverberation intensity can be calculated based on an estimation of Signal to Reverberant energy Ratio (SRR) in various frequency bands of the input audio signal. SRR may be calculated using various techniques.

An example technique to calculate SRR may involve dividing the input audio signal into frequency bands and accumulating powers or energies in each frequency band. The powers or energies may be accumulated over a predetermined time period, such as 5 milliseconds, 10 milliseconds, 15 milliseconds, etc. Note that the time period may be similar to or substantially same as a frame length of a frame of the input audio signal. The SRR may then be calculated for each band based on the accumulated powers or energies in each frequency band. In some implementations, the input audio signal may be divided into frequency bands whose spacing and width emulate filtering performed by the human cochlea. For example, the input audio signal may be transformed into the frequency domain using a transform (e.g., Discrete Fourier Transform (DFT), Discrete Cosine Transformation (DCT), Complex Quadrature Mirror Filter (CQMF), or the like), and then accumulating energies of frequency bins according to a scale that emulates filtering performed by the human cochlea (e.g., the Mel scale, the Bark scale, the Equivalent Rectangular Bandwidth (ERB) rate scale, or the like). As another example, the input audio signal may be filtered using a gammatone filterbank, and the energy of each band may be calculated by accumulating the power of the output of each filter.

Another example technique to calculate the SRR of the input audio signal, which may be applied if the input audio signal is stereo-channel or multi-channel, is coherence analysis of the channels of the input audio signal.

Yet another example technique to calculate the SRR of the input audio signal, which may be applied if the input audio signal is stereo-channel or multi-channel, is eigenvalue decomposition of the channels of the input audio signal.

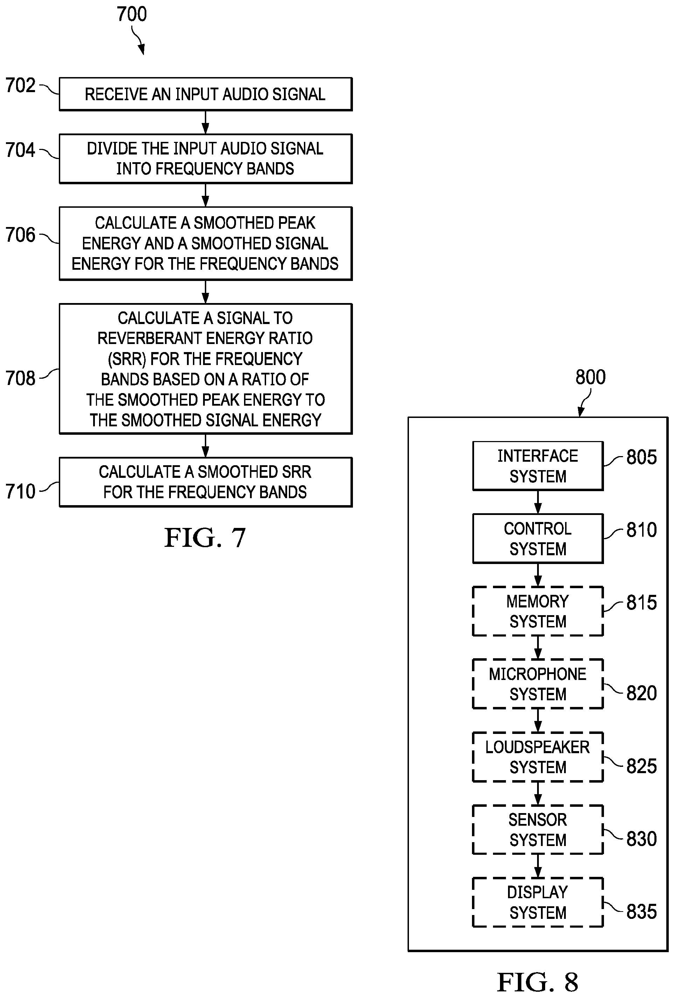

Still another example technique to calculate the SRR of the input audio signal involves calculation of a ratio of peak energy in a band to energy after the signal. More detailed techniques for calculation of SRR based on peak energy in a band are shown in and described below in connection with Figure 7.

In some implementations, a smoothed version of the SRR may be calculated (represented herein as $SRR_{smooth}(n)$). In some implementations, the smoothed version of the SRR may be calculated using one-pole smoothing. More detailed techniques for calculating a smoothed version of the SRR are described below in connection with block 710 of Figure 7.

In some implementations, the reverberation intensity $r(n)$ can be calculated based on the SRR. Alternatively, in some implementations, the reverberation intensity $r(n)$ can be calculated based on the smoothed SRR. The reverberation intensity may be, for each frame, a scaled representation of the SRR or the smoothed SRR at the corresponding frame. An example equation for calculating reverberation intensity from smoothed SRR is given by:

$$r(n) = 1 + c * SRR_{smooth}(n).$$

In the equation given above, c can be a scaling factor that normalized $r(n)$ to a value between 0 and 1.

At 406, process 400 can calculate an attack phase smoothing time constant $t\_att$ and a release phase smoothing time constant $t\_rel$ based on the reverberation intensity.

In some implementations, the attack phase smoothing time constant and/or the release phase smoothing time constant can be calculated based on a continuous function calculates the time constant (e.g., the attack phase smoothing time constant and/or the release phase smoothing time constant) as a continuous value based on the reverberation intensity. An example of such a continuous function for the attack phase smoothing time constant is:

$$t_{att}(n) = r(n) * t_{att\_slow} + \left(1 - r(n)\right) * t_{att\_fast},$$

where $t_{att}$ represents the attack phase smoothing time constant, $n$ represents a frame of the input audio signal, $r(n)$ represents the reverberation intensity calculated at block 404, and $t_{att\_slow}$ and $t_{att\_fast}$ are constants. In some implementations, $t_{att\_slow}$ may have a value of about 0.25 seconds, 0.2 seconds, 0.15 seconds, or the like. In some implementations, $t_{att\_fast}$ may have a value of about 0.03 seconds, 0.04 seconds, 0.05 seconds, or the like. Such an attack phase smoothing time constant may be used to as a time constant of a decay of the reverberation suppression gain.

An example of a corresponding continuous function for the release phase smoothing time constant is:

$$t_{rel}(n) = r(n) * t_{rel\_slow} + \left(1 - r(n)\right) * t_{rel\_fast},$$

where $t_{rel}$ represents the release phase smoothing time constant, $n$ represents a frame of the input audio signal, $r(n)$ represents the reverberation intensity calculated at block 404, and $t_{rel\_slow}$ and $t_{rel\_fast}$ are constants. In some implementations, $t_{rel\text{-}slow}$ may have a value of about 0.25 seconds, 0.2 seconds, 0.15 seconds, or the like. In some implementations, $t_{rel\_fast}$ may have a value of about 0.04 seconds, 0.05 seconds, 0.06 seconds, or the like. In some implementations, a value of $t_{att\_slow}$ may be the same as a value of $t_{rel\_slow}$. In some implementations, a value of $t_{rel\_fast}$ may be greater than a value of $t_{att\_fast}$.

Such a release phase smoothing time constant may be used as a time constant of a decay of the reverberation suppression gain.

It should be noted that, in an instance in which a continuous function is used to calculate $t_{att}$, $t_{att}$ has a continuous value between $t_{att\_slow}$ and $t_{att\_fast}$, where the value is determined based on the reverberation intensity. In particular, $t_{att}$ has a value closer to $t_{att\_fast}$ at relatively low reverberation intensities, and $t_{att}$ has a value closer to $t_{att\_slow}$ relatively high reverberation intensities. In other words, in some implementations, $t_{att}$ is shorter for low reverberation intensities than for high reverberation intensities. Similarly, $t_{rel}$ has a continuous value between $t_{rel\_slow}$ and $t_{rel\_fast}$, where the value is determined based on the reverberation intensity. In particular, $t_{rel}$ has a value closer to $t_{rel\_fast}$ at relatively low reverberation intensities, and $t_{rel}$ has a value closer to $t_{rel\_slow}$ at relatively high reverberation intensities. In other words, in some implementations, $t_{rel}$ is shorter for low reverberation intensities than for high reverberation intensities. Because a shorter time constant corresponds to a faster reverberation suppression decay, a faster suppression decay may therefore be applied to low reverberation intensities than for high reverberation intensities. Additionally, it should be noted that, in some implementations, a value of $t_{att}$ may be substantially similar to a value of $t_{rel}$ at relatively high reverberation intensities.

Additionally, or alternatively, in some implementations, the attack phase smoothing time constant and/or the release phase smoothing time constant can be switched between two sets of values based on the value of the reverberation intensity, $r(n)$. It should be noted that, in some implementations, the attack phase smoothing constant may be switched between two sets of values, and a release phase smoothing time constant may be determined as a continuous value, or vice versa. For example, in some implementations, the attack phase smoothing time constant $t_{att}$ can be switched between two values, $t_{att\_slow}$ and $t_{att\_fast}$ by:

$$t_{att}(n) = gating\big(r(n)\big) * t_{att\_slow} + \Big(1 - gating\big(r(n)\big)\Big) * t_{att\_fast}.$$

In some implementations, the release phase smoothing time constant $t_{rel}$ can be switched between two values, $t_{rel\_slow}$ and $t_{rel\_fast}$ by:

$$t_{rel}(n) = gating\big(r(n)\big) * t_{rel\_slow} + \Big(1 - gating\big(r(n)\big)\Big) * t_{rel\_slow}.$$

In the equation above, *gating(r(n))* can define a thresholding function applied to the reverberation intensity *r(n)*:

$$gating(n) = \begin{cases} 1, r(n) > Threshold \\ \quad 0, otherwise \end{cases}.$$

The threshold can be a constant, such as 0.5, 0.6, etc.

At 408, process 400 can calculate an attack phase smoothing factor and a release phase smoothing factor. In some implementations, the attack phase smoothing factor (represented herein as $c_{att}$) can be calculated based on the attack phase smoothing time constant $t_{att}$ by:

$$c_{att}(n) = \exp\left(-\frac{T}{t_{att}(n)}\right).$$

In the equation above, *T* represents the length or duration of a frame of the input audio signal.

In some implementations, the release phase smoothing factor (represented herein as $c_{rel}$) can be calculated based on the release phase smoothing time constant $t_{rel}$ by:

$$c_{rel}(n) = \exp\left(-\frac{T}{t_{rel}(n)}\right),$$

where T represents the length or duration of a frame of the input audio signal.

In some implementations, $c_{att}$ can be smaller than $c_{rel}$ at relatively low reverberation intensities (e.g., when *r(n)* is less than 0.5, when $r(n)$ is less than 0.6, or the like). In some implementations, $c_{att}$ can be substantially the same as $c_{rel}$ at relatively high reverberation intensities (e.g., when $r(n)$ is greater than 0.5, when $r(n)$ is greater than 0.7, or the like).

At 410, process 400 can calculate an adjusted reverberation suppression gain (represented herein as $g_{steered}(n)$) based on the attack phase smoothing factor and the release phase smoothing factor. An example of an equation that can be used to calculate $g_{steered}(n)$ is:

$$g_{steered}(n)$$
$$= \begin{cases} c_{att} * g_{steered}(n-1) + (1 - c_{att}) * g(n), when\ g(n) > g_{steered}(n-1) \\ c_{rel} * g_{steered}(n-1) + (1 - c_{rel}) * g(n), otherwise \end{cases}$$

In the equation above, the condition of $g(n) > g_{steered}(n\text{-}1)$ corresponds to the attack phase of reverberant speech. Accordingly, because $c_{att}(n)$ may have a lower value at low reverberation intensities (e.g., when $r(n)$ is less than 0.5, when $r(n)$ is less than 0.6, or the like) relative to values of $c_{att}(n)$ at higher reverberation intensities, the initial reverberation gain (e.g., $g(n)$) may be weighted more for the attack phase and at relatively low reverberation intensities when calculating the smoothed adjusted reverberation suppression gain than at higher reverberation intensities.

Accordingly, the adjusted reverberation suppression gain adjusts a decay of the reverberation suppression gain based on a reverberation intensity detected in the input audio signal. This specific example uses the attack phase smoothing factor and the release phase smoothing factor, however other methods may be used to adjust the decay based on a reverberation intensity, including using other time constants.

Figure 5 shows an example of a process 500 for calculating adjusted reverberation suppression gains based on room resonance in accordance with some implementations. In some implementations, blocks of process 500 may be performed in various orders not shown in Figure 5. Additionally, or alternatively, in some implementations, two or more blocks of process 500 may be performed substantially in parallel. Additionally, or alternatively, in some implementations, one or more blocks of process 500 may be omitted.

Process 500 can begin at 502 by receiving an input audio signal. As described above, the input audio signal may include a series of frames, each corresponding to a portion of the input audio signal.

At 504, process 500 can divide the input audio signal into frequency bands. In some implementations, the input audio signal may be divided into frequency bands whose spacing and width emulate filtering performed by the human cochlea. For example, the input audio signal may be transformed into the frequency domain using a transform (e.g., Discrete Fourier Transform (DFT), DCT, CQMF, or the like), and then accumulating energies of frequency bins according to a scale that emulates filtering performed by the human cochlea (e.g., the Mel scale, the Bark scale, the ERB-rate scale, or the like). As another example, the input audio signal may be filtered using a gammatone filterbank, and the energy of each band may be calculated by accumulating the power of the output of each filter.

At 506, an SRR (referred to herein as $SRR(n)$) can be calculated for the frames for each of the frequency bands. In some implementations, the SRR can be calculated based on calculation of a ratio of peak energy in a band to energy after the signal. More detailed techniques for calculation of SRR based on peak energy in a band are shown in and described below in connection with Figure 7.

At 508, process 500 can determine whether room resonance is present in each frequency band and frame based on the SRR. For example, process 500 can calculate $res_b(n)$, which indicates the presence of room resonance in a band $b$ and a frame $n$. As a more particular example, in some implementations, $res_b(n)$ can be calculated by comparing the SRR to a threshold. An example of an equation that can be used to calculate $res_b(n)$ by comparing a smoothed SRR to a threshold is given by:

$$res_b(n) = \begin{cases} 1, SRR_{smooth}(n) < Threshold \\ 0, otherwise \end{cases}.$$

In some implementations, $SRR_{smooth}(n)$ can be a smoothed version of $SRR(n)$. In some implementations, $SRR_{smooth}(n)$ can be calculated using one-pole smoothing, as described below in connection with block 710 of Figure 7.

As another more particular example, in some implementations, $res_b(n)$ can be calculated as a continuous value using an activation function. An example of an equation that can be used to calculate $res_b(n)$ using an activation function is given by:

$$res_b(n) = \frac{1}{1+e^{-a(x-Th)}}.$$

In the above, $a$ represents a scale factor that adjusts transition region width. It should be noted that the transition region may be defined as a sub-range of $res_b(n)$. Examples of such a sub-range include 0.2-0.8, 0.3-0.7, 0.4-0.6. By adjusting $a$, and therefore, the transition region width, the steepness of the slope of the activation function may be effectively adjusted. Example values of $a$ can include 0.8, 1.0, 1.2, and the like. In the above, $Th$ represents a soft threshold. Example values of $Th$ can include 10 dB, 15 dB, and the like.

At 510, process 500 can calculate an adjusted reverberation suppression gain (referred to herein as $g\_color_b(n)$) for the frequency bands $b$ and for the frames $n$ based on the room resonance $res_b(n)$. In some implementations, the adjusted reverberation suppression gain can indicate a decrease in the reverberation suppression gain that is to be applied to a particular frequency band based on an amount of resonance detected in the frequency band. That is, in some implementations, the adjusted reverberation suppression gain may effectively decrease reverberation suppression gain applied to a frequency band in which room resonance is detected, thereby preserving spectral color of the input audio signal.

In some implementations, the adjusted reverberation suppression gain for each frequency band can be proportional to the room resonance of the frequency band. An example of an equation for calculating an adjusted reverberation suppression gain for each frequency band that is proportional to the room resonance of the frequency band is given by:

$$g\_color_b(n) = -color\_scale * r_b(n),$$

where $color\_scale$ is a constant scaling factor. Example values of $color\_scale$ include 3 dB, 4 dB, and the like.

In some implementations, the adjusted reverberation suppression gain for each frequency band can be based on an offline analysis of room resonance across multiple frames. For example, the multiple frames can span the entire input audio signal, or a subset of the input audio signal that includes multiple frames. An example of an equation for calculating an adjusted reverberation suppression gain for each frequency band based on an offline analysis of room resonance across multiple frames is given by:

$$g\_color_b(n) = -color\_scale * mean(r_b),$$

where $mean(r_b)$ represents a mean of the room resonance $r_b$ across the multiple frames.

In some implementations, to avoid excessive different gains applied to different frequency bands, process 500 can apply a time-frequency regularization to the adjusted reverberation suppression gains $g\_color_b(n)$. For example, process 500 can perform timesmoothing using one-pole smoothing. As another example, process 500 can perform frequency-smoothing by smoothing across adjacent frequency bands.

Figures 6A and 6B show examples of processes 600 and 650 for calculating adjusted reverberation suppression gain to compensate loudness suppression resulting from an initial reverberation suppression gain. In particular, Figure 6A illustrates an example process for calculating an adjusted reverberation suppression gain based on initial suppression gains applied to a direct part of an input audio signal. By contrast, Figure 6B illustrates an example process for calculating an adjusted reverberation suppression gain based on loudness levels of a direct part of an input audio signal.

Process 600 can begin at 602 by receiving an input audio signal and/or initial reverberation suppression gains for frames of the input audio signal. The initial reverberation suppression gains are generally referred to as $g(n)$ herein, where $n$ represents a frame of the input audio signal.

At 604, process 600 can select initial reverberation suppression gains that correspond to a direct part of the input audio signal, generally referred to as $g_{direct}(n)$ herein. For example, process 600 can select the initial reverberation suppression gains that correspond to the direct part of the input audio signal by selecting initial reverberation suppression gains that exceed a threshold. An example of an equation that can be used to select the initial reverberation suppression gains that correspond to the direct part of the input audio signal is:

$$g_{direct}(n) = \begin{cases} 1, when \ g(n) > Threshold \\ 0, otherwise \end{cases}.$$

In the above, $Threshold$ can be a constant that depends on the maximum suppression gain in $g(n)$. For example, $Threshold$ can be 30% of the maximum suppression gain, 40% of the maximum suppression gain, or the like.

At 606, process 600 can calculate smoothed selected initial reverberation suppression gains that correspond to the direct part of the input audio signal. That is, process 600 can calculate a smoothed version of $g_{direct}(n)$. In some implementations, the smoothed selected initial reverberation suppression gains can be calculated using one-pole smoothing applied to the selected initial reverberation suppression gains. An example of an equation for calculating the smoothed selected initial suppression gains that correspond to the direct part of the input audio signal (referred to herein as $g_{direct\_smooth}(n)$) is given by:

$$g_{direct\_smooth}(n) =$$
$$\begin{cases} c * g_{direct\_smooth}(n-1) + (1-c) * g_{direct}(n), when\ g_{direct}(n) = 1 \\ g_{direct\_smooth(n-1)}, otherwise \end{cases}.$$

In the above, c represents a smoothing time constant. Example values of c can include 0.1 seconds, 0.15 seconds, or the like.

At 608, process 600 can estimate gains applied to the direct part of the input audio signal based on the smoothed selected initial reverberation suppression gains. The estimated gains applied to the direct part of the input audio signal is generally referred to herein as $\widehat{s_{gain}}$.

For example, in some implementations, process 600 can calculate the estimated gains applied to the direct part of the input audio signal by generating a histogram from the smoothed selected initial suppression gains (e.g., the smoothed suppression gains applied to the direct part of the input audio signal). As a more particular example, in some implementations, the estimated gains applied to the direct part of the input audio signal (e.g., $\widehat{s_{gain}}$) can be estimated based on the interval of the histogram with the maximum number of samples. As another more particular example, in some implementations, the estimated gains applied to the direct part of the input audio signal (e.g., $\widehat{s_{gain}}$) can be estimated based on a gain value associated with a predetermined percentile of the histogram (e.g., the 60th percentile, the 70th percentile, or the like). As a specific example, in an instance in which the predetermined percentile is the 60th percentile, the estimated gains applied to the direct part of the input audio signal can be the gain value of the interval of the histogram for which 60 percent of the gains are below the gain value.

As another example, in some implementations, process 600 can calculate the estimated gains applied to the direct part of the input audio signal based on an average (e.g., a mean, median, or the like) or a variance of the smoothed selected initial reverberation suppression gains and based on the maximum of the smoothed selected initial reverberation suppression gains. It should be noted that, in some implementations, the average or the variance of the smoothed selected initial reverberation suppression gains may be calculated in an offline analysis. Alternatively, when calculated as part of a real-time analysis, the average or the variance of the smoothed selected initial reverberation suppression gains may be calculated based on a sliding time window. An example of an equation to calculate the estimated gains applied to the direct part of the input audio signal is given by:

$$\widehat{s_{gain}} = c * mean(g_{direct\_smooth}) + (1-c) * \max(g_{direct\_smooth}).$$

In the above, c is a scaling factor between 0 and 1. Example values of c include 0.4, 0.5, 0.6, or the like. In the above, the mean($g_{direct\_smooth}$) and max($g_{direct\_smooth}$) may be calculated over a certain number of frames, such as over 80 frames, 100 frames, 120 frames, or the like. In some implementations, such as in real-time applications, the estimated gains may be calculated with a sliding time window that includes the current frame and prior frames. In real-time applications, example sliding time windows may include 0.8 seconds, 1 second, 1.2 seconds, or the like. That is, with a frame size of 10 msec, the estimated gains may be determined based on 80 frames, 100 frames, 120 frames, or the like. In some implementations, such as when an offline analysis is performed, the estimated gains may be calculated based on an entire file, or a dataset of many files, where each file includes at least one input audio signal.

At 610, process 600 can calculate an adjusted reverberation suppression gain based on the estimated gains applied to the direct part of the input audio signal and based on a target gain. The adjusted reverberation suppression gain can effectively be a gain that compensates a loudness of the reverberation suppression, and is generally referred to herein as $g_{loud}$. An example of an equation to calculate the adjusted reverberation suppression gain is given by:

$$g_{loud} = Target - \widehat{s_{gain}}.$$

In the above, *Target* is a parameter that indicates an amount the direct part of the input audio signal is to be boosted by after reverberation suppression. In other words, *Target* corresponds to a target gain for the direct part of the input audio signal. In instances in which the direct part of the input audio signal is to be boosted, *Target* can be a value greater than 0 dB, such as 2 dB, 3 dB, or the like. Conversely, in an instance in which the direct part of the input audio signal is not to be boosted, *Target* can be 0 dB. It should be noted that $g_{loud}$ is a function of *n* in real-time applications. However, in offline applications, where the estimated gains may be determined by analyzing an entire file or several files from a database, $g_{loud}$ is not a function of $n$.

In some implementations, process 600 can smooth the adjusted reverberation suppression gain. For example, in some implementations process 600 can smooth the adjusted reverberation suppression gain in an instance in which the adjusted reverberation suppression gain is calculated in real-time. An example of an equation for calculating a smoothed adjusted reverberation suppression gain using one-pole smoothing is given by:

$$g_{loud\_smooth}(n) = c * g_{loud\_smooth}(n-1) + (1-c) * g_{loud}(n).$$

In the above, c can be a smoothing factor determined based on a smoothing time constant. For example, c may be given by:

$$c = exp^{-\frac{T}{\tau}}.$$

In the above, T corresponds to the frame duration, and $\tau$ is a time constant.

Note that, in instances in which the adjusted reverberation suppression gains are calculated based on an offline analysis, the adjusted reverberation suppression gain may not need to be smoothed.

Turning to Figure 6B, example process 650 for calculating an adjusted reverberation suppression gain for loudness compensation based on a loudness level of a direct part of an input audio signal is shown in accordance with some implementations.

Process 650 can begin at 652 by receiving an input audio signal and/or initial reverberation suppression gains for frames of the input audio signal. The initial reverberation suppression gains are generally referred to as $g(n)$ herein, where $n$ represents a frame of the input audio signal.

At 654, process 650 can select initial reverberation suppression gains that correspond to a direct part of the input audio signal, generally referred to as $g_{direct}(n)$ herein. For example, process 650 can select the initial reverberation suppression gains that correspond to the direct part of the input audio signal by selecting initial reverberation suppression gains that exceed a threshold. An example of an equation that can be used to select the initial reverberation suppression gains that correspond to the direct part of the input audio signal is:

$$g_{direct}(n) = \begin{cases} 1, when\ g(n) > Threshold \\ 0, otherwise \end{cases}.$$

In the above, *Threshold* can be a constant that depends on the maximum suppression gain in $g(n)$. For example, *Threshold* can be 30% of the maximum suppression gain, 40% of the maximum suppression gain, or the like.

At 656, process 650 can calculate smoothed loudness levels for frames of the input audio signal (referred to herein as $L_{smooth}$) based on the selected initial reverberation suppression gains corresponding to the direct part of the input audio signal and based on a loudness of each frame with the initial reverberation suppression gain applied. An example of an equation to calculate the smoothed loudness levels for frames of the input audio signal is given by:

$$L_{smooth}(n) = \begin{cases} c * L_{smooth}(n-1) + (1-c) * L(n), when\ g_{direct}(n) = 1 \\ L_{smooth}(n-1), otherwise \end{cases}.$$

In the equation given above, $L(n)$ represents the loudness of frame $n$ with the initial reverberation suppression gain applied. In the above, c represents a smoothing time constant. Examples values of *c* may include 0.1 seconds, 0.15 seconds, or the like.

At 658, process 650 can estimate the loudness levels of the direct part of the input audio signal based on the smoothed loudness levels. The estimated loudness levels are generally referred to herein as $\widehat{S_{loud}}$.

For example, in some implementations, process 650 can calculate the estimated loudness levels of the direct part of the input audio signal by generating a histogram from the smoothed loudness levels. As a more particular example, in some implementations, the estimated loudness levels of the direct part of the input audio signal (e.g., $\widehat{S_{loud}}$) can be estimated based on the interval of the histogram with the maximum number of samples. As another more particular example, in some implementations, the estimated loudness levels of the direct part of the input audio signal (e.g., $\widehat{S_{loud}}$) can be estimated based on a loudness level associated with a predetermined percentile of the histogram (e.g., the 60th percentile, the 70th percentile, or the like). As a specific example, in an instance in which the predetermined percentile is the 60th percentile, the estimated loudness levels of the direct part of the input audio signal can be the loudness level associated with the interval of the histogram for which 60 percent of the gains are below the loudness level.

As another example, in some implementations, process 650 can calculate the estimated loudness levels of the direct part of the input audio signal based on an average (e.g., a mean, a median, or the like) or a variance of the smoothed loudness levels and based on the maximum of the smoothed loudness levels. It should be noted that, in some implementations, an average or a variance of the smoothed loudness levels may be calculated in an offline analysis. Alternatively, in some implementations, the average or the variance of the smoothed loudness levels may be calculated in a real-time analysis using a sliding time window. An example of an equation to calculate the estimated loudness levels of the direct part of the input audio signal is given by:

$$\widehat{s_{loud}} = c * mean(L_{smooth}) + (1 - c) * \max(L_{smooth}).$$

In the above, c is a scaling factor between 0 and 1. Example values of c include 0.4, 0.5, 0.6, or the like. In the above, the mean($L_{smooth}$) and max($L_{smooth}$) may be calculated over a certain number of frames, such as over 80 frames, 100 frames, 120 frames, or the like. In some implementations, such as in real-time applications, the estimated loudness levels may be calculated with a sliding time window that includes the current frame and prior frames. In real-time applications, example sliding time windows may include 0.8 seconds, 1 second, 1.2 seconds, or the like. That is, with a frame size of 10 msec, the estimated gains may be determined based on 80 frames, 100 frames, 120 frames, or the like. In some implementations, such as when an offline analysis is performed, the estimated loudness levels may be calculated based on an entire file, or a dataset of many files, where each file includes at least one input audio signal.

At 660, process 650 can calculate an adjusted reverberation suppression gain that compensates the loudness of the direct part of the input audio signal when reverberation suppression is applied based on the loudness levels of the direct part of the input audio signal and based on a target loudness. An example of an equation to calculate an adjusted reverberation suppression gain is given by:

$$g_{loud} = Target_{loudness} - \widehat{s_{loud}}.$$

In the above, *Target*$_{loudness}$ is a parameter that indicates an absolute target loudness level of the direct part of the input audio signal after reverberation suppression is applied. Example values of *Target*$_{loudness}$ can be -15 dB, -10 dB, and the like. It should be noted that values of *Target*$_{loudness}$ may be relative to a full scale digital sound. It should additionally be noted that $g_{loud}$ is a function of *n* in real-time applications. However, in offline applications, where the estimated loudness levels may be determined by analyzing an entire file or several files from a database, $g_{loud}$ is not a function of *n*.

In some implementations, process 650 can smooth the adjusted reverberation suppression gain. For example, in some implementations, process 650 can smooth the adjusted reverberation suppression gain in an instance in which the adjusted reverberation suppression gain is calculated in real-time. An example of an equation for calculating a smoothed adjusted reverberation suppression gain using one-pole smoothing is given by:

$$g_{loud\_smooth}(n) = c * g_{loud\_smooth}(n - 1) + (1 - c) * g_{loud}(n).$$

In the above, c can be a smoothing factor determined based on a time constant. For example, c may be given by:

$$c = exp^{-\frac{T}{\tau}}.$$

In the above, *T* corresponds to a frame duration, and $\tau$ is a time constant.

Note that, in instances in which the adjusted reverberation suppression gains are calculated based on an offline analysis, the adjusted reverberation suppression gain may not need to be smoothed.

Figure 7 shows an example of a process 700 for determining an SRR. In some implementations, an SRR can be used to determine a reverberation intensity (e.g., as described above in connection with Figure 4), to determine an amount of room resonance (e.g., as described above in connection with Figure 5), and the like. In some implementations, blocks of process 700 may be performed in various orders not shown in Figure 7. Additionally, or alternatively, in some implementations, two or more blocks of process 700 may be performed substantially in parallel. Additionally, or alternatively, in some implementations, one or more blocks of process 700 may be omitted.

Process 700 can begin at 702 by receiving an input audio signal. As described above, the input audio signal may include a series of frames, each corresponding to a portion of the input audio signal.

At 704, process 700 can divide each frame of the input audio signal into frequency bands. In some implementations, the input audio signal may be divided into frequency bands whose spacing and width emulate filtering performed by the human cochlea. For example, the input audio signal may be transformed into the frequency domain using a transform (e.g., DFT, DCT, CQMF, or the like), and then accumulating energies of frequency bins according to a scale that emulates filtering performed by the human cochlea (e.g., the Mel scale, the Bark scale, the ERB-rate scale, or the like). As another example, the input audio signal may be filtered using a gammatone filterbank, and the energy of each band may be calculated by accumulating the power of the output of each filter.

At 706, process 700 can calculate a smoothed peak energy (represented herein as $P_{peak\_smooth}$) and a smoothed signal energy after peaks (represented herein as $P_{signal\_smooth}$) for the frequency bands for each frame $n$ of the input audio signal. In some implementations, the smoothed peak energy and the smoothed signal energy after peaks can be calculating using one-pole smoothers.

An example of an equation to calculate $P_{peak\_smooth}$ from $P_{peak}$, which represents the peak energy in a frequency band, is:

$$P_{peak\_smooth}(n)$$
$$= \begin{cases} c_{peak\_att} * P_{peak\_smooth}(n-1) + \left(1 - c_{peak\_att}\right) * P_{peak}(n), when\ P_{peak}(n) > P_{peak\_smooth}(n-1) \\ c_{peak\_rel} * P_{peak\_smooth}(n-1) + \left(1 - c_{peak\_rel}\right) * P_{peak}(n), otherwise \end{cases}$$

In the above equation, $c_{pear\_att}$ represents time constants for the attack phase. Typical values of $c_{pear\_att}$ can be 0.1 seconds, 0.12 seconds, 0.15 seconds, and the like. In the above equation, $c_{pear\_rel}$ represents time constants for the release phase. Typical values of $c_{peak\_rel}$ can be 2 seconds, 2.2 seconds, 2.4 seconds, and the like.

An example of an equation to calculate $P_{signal\_smooth}$ from $P_{signal}$, which represents the signal energy after a peak in a frequency band, is:

$$P_{signal\_smooth}(n)$$
$$= \begin{cases} c_{signal\_att} * P_{signal\_smooth}(n-1) + \left(1 - c_{signal\_att}\right) * P_{signal}(n), when\ P_{signal}(n) > P_{signal\_smooth}(n-1) \\ c_{signal\_rel} * P_{signal\_smooth}(n-1) + \left(1 - c_{signal\_rel}\right) * P_{signal}(n), otherwise \end{cases}$$

In the above equation, $c_{signal\_att}$ represents time constants for the attack phase. Typical values of $c_{signal\_att}$ can be 0.3 seconds, 0.32 seconds, 0.35 seconds, and the like. In some implementations, $c_{signal\_att}$ may be longer than $c_{peak\_att}$ (e.g., two times as long, three times as long, and the like). In the above equation, $c_{signal\_rel}$ represents time constants for the release phase. Typical values of $c_{signal\_rel}$ can be 0.5 seconds, 0.55 seconds, 0.6 seconds, and the like. In some implementations, $c_{signal\_rel}$ can be shorter than $c_{peak\_rel}$ (e.g., four times shorter, five times shorter, and the like).

At 708, process 700 can calculate SRRs for the frequency bands based on a ratio of the smoothed energy over the peaks (which represents the speech energy) to the energy of the signal with the peaks smoothed (which represents the reverberation energy). An example of an equation to calculate SRR for a particular frequency band based on values of $P_{peak\_smooth}$ and $P_{signal\_smooth}$ is given by:

$$SRR(n) = 10\log\left(\frac{P_{peak\_smooth}(n)}{P_{signal\_smooth}(n)}\right).$$

At 710, process 700 can calculate a smoothed SRR for the frequency bands. By calculating a smoothed SRR, fluctuations in reverberation intensity across frames of the input audio signal can be smoothed. In some implementations, the smoothing can be one-pole smoothing. An example of an equation for calculating a smoothed SRR (represented herein as *SRRsmooth*) is given by:

$$SRR_{smooth}(n)$$
$$= \begin{cases} coeff_{att} * SRR_{smooth}(n-1) + (1 - coeff_{att}) * SRR(n), when\ SRR(n) > SRR_{smooth}(n-1) \\ coeff_{rel} * SRR_{smooth}(n-1) + (1 - coeff_{rel}) * SRR(n), otherwise \end{cases}$$

In the above equation, *coeff*$_{att}$ and *coeff*$_{rel}$ correspond to attack and release smoothing factors, respectively. Example values of *coeff*$_{att}$ can be 0.2 seconds, 0.25 seconds, and the like. Example values of *coeff*$_{rel}$ can be 0.7 seconds, 0.8 seconds, and the like. In some implementations, *coeff*$_{att}$ can be shorter than *coeff*$_{rel}$. In effect, during the attack phase of reverberant speech, instantaneous SRR values can be weighted more heavily than in the release phase of reverberant speech.

Figure 8 is a block diagram that shows examples of components of an apparatus capable of implementing various aspects of this disclosure. As with other figures provided herein, the types and numbers of elements shown in Figure 8 are merely provided by way of example. Other implementations may include more, fewer and/or different types and numbers of elements. According to some examples, the apparatus 800 may be configured for performing at least some of the methods disclosed herein. In some implementations, the apparatus 800 may be, or may include, a television, one or more components of an audio system, a mobile device (such as a cellular telephone), a laptop computer, a tablet device, a smart speaker, or another type of device.

According to some alternative implementations the apparatus 800 may be, or may include, a server. In some such examples, the apparatus 800 may be, or may include, an encoder. Accordingly, in some instances the apparatus 800 may be a device that is configured for use within an audio environment, such as a home audio environment, whereas in other instances the apparatus 800 may be a device that is configured for use in "the cloud," e.g., a server.

In this example, the apparatus 800 includes an interface system 805 and a control system 810. The interface system 805 may, in some implementations, be configured for communication with one or more other devices of an audio environment. The audio environment may, in some examples, be a home audio environment. In other examples, the audio environment may be another type of environment, such as an office environment, an automobile environment, a train environment, a street or sidewalk environment, a park environment, etc. The interface system 805 may, in some implementations, be configured for exchanging control information and associated data with audio devices of the audio environment. The control information and associated data may, in some examples, pertain to one or more software applications that the apparatus 800 is executing.

The interface system 805 may, in some implementations, be configured for receiving, or for providing, a content stream. The content stream may include audio data. The audio data may include, but may not be limited to, audio signals. In some instances, the audio data may include spatial data, such as channel data and/or spatial metadata. In some examples, the content stream may include video data and audio data corresponding to the video data.

The interface system 805 may include one or more network interfaces and/or one or more external device interfaces (such as one or more universal serial bus (USB) interfaces). According to some implementations, the interface system 805 may include one or more wireless interfaces. The interface system 805 may include one or more devices for implementing a user interface, such as one or more microphones, one or more speakers, a display system, a touch sensor system and/or a gesture sensor system. In some examples, the interface system 805 may include one or more interfaces between the control system 810 and a memory system, such as the optional memory system 815 shown in Figure 8. However, the control system 810 may include a memory system in some instances. The interface system 805 may, in some implementations, be configured for receiving input from one or more microphones in an environment.

The control system 810 may, for example, include a general purpose single- or multi-chip processor, a digital signal processor (DSP), an application specific integrated circuit (ASIC), a field programmable gate array (FPGA) or other programmable logic device, discrete gate or transistor logic, and/or discrete hardware components.

In some implementations, the control system 810 may reside in more than one device. For example, in some implementations a portion of the control system 810 may reside in a device within one of the environments depicted herein and another portion of the control system 810 may reside in a device that is outside the environment, such as a server, a mobile device (e.g., a smartphone or a tablet computer), etc. In other examples, a portion of the control system 810 may reside in a device within one environment and another portion of the control system 810 may reside in one or more other devices of the environment. For example, control system functionality may be distributed across multiple smart audio devices of an environment, or may be shared by an orchestrating device (such as what may be referred to herein as a smart home hub) and one or more other devices of the environment. In other examples, a portion of the control system 810 may reside in a device that is implementing a cloud-based service, such as a server, and another portion of the control system 810 may reside in another device that is implementing the cloud-based service, such as another server, a memory device, etc. The interface system 805 also may, in some examples, reside in more than one device.

In some implementations, the control system 810 may be configured for performing, at least in part, the methods disclosed herein. According to some examples, the control system 810 may be configured for implementing methods for improving perceptual quality of dereverberation.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 815 shown in Figure 8 and/or in the control system 810. Accordingly, various innovative aspects of the subject matter described in this disclosure can be implemented in one or more non-transitory media having software stored thereon. The software may, for example, include instructions for controlling at least one device to calculate initial reverberation suppression gains, calculate adjusted reverberation suppression gains based on loudness, room resonance, and/or reverberation time, and the like. The software may, for example, be executable by one or more components of a control system such as the control system 810 of Figure 8.

In some examples, the apparatus 800 may include the optional microphone system 820 shown in Figure 8. The optional microphone system 820 may include one or more microphones. In some implementations, one or more of the microphones may be part of, or associated with, another device, such as a speaker of the speaker system, a smart audio device, etc. In some examples, the apparatus 800 may not include a microphone system 820. However, in some such implementations the apparatus 800 may nonetheless be configured to receive microphone data for one or more microphones in an audio environment via the interface system 810. In some such implementations, a cloud-based implementation of the apparatus 800 may be configured to receive microphone data, or a noise metric corresponding at least in part to the microphone data, from one or more microphones in an audio environment via the interface system 810.

According to some implementations, the apparatus 800 may include the optional loudspeaker system 825 shown in Figure 8. The optional loudspeaker system 825 may include one or more loudspeakers, which also may be referred to herein as "speakers" or, more generally, as "audio reproduction transducers." In some examples (e.g., cloud-based implementations), the apparatus 800 may not include a loudspeaker system 825. In some implementations, the apparatus 800 may include headphones. Headphones may be connected or coupled to the apparatus 800 via a headphone jack or via a wireless connection (e.g., BLUETOOTH).

In some implementations, the apparatus 800 may include the optional sensor system 830 shown in Figure 8. The optional sensor system 830 may include one or more touch sensors, gesture sensors, motion detectors, etc. According to some implementations, the optional sensor system 830 may include one or more cameras. In some implementations, the cameras may be free-standing cameras. In some examples, one or more cameras of the optional sensor system 830 may reside in an audio device, which may be a single purpose audio device or a virtual assistant. In some such examples, one or more cameras of the optional sensor system 830 may reside in a television, a mobile phone or a smart speaker. In some examples, the apparatus 800 may not include a sensor system 830. However, in some such implementations the apparatus 800 may nonetheless be configured to receive sensor data for one or more sensors in an audio environment via the interface system 810.

In some implementations, the apparatus 800 may include the optional display system 835 shown in Figure 8. The optional display system 835 may include one or more displays, such as one or more light-emitting diode (LED) displays. In some instances, the optional display system 835 may include one or more organic light-emitting diode (OLED) displays. In some examples, the optional display system 835 may include one or more displays of a television. In other examples, the optional display system 835 may include a laptop display, a mobile device display, or another type of display. In some examples wherein the apparatus 800 includes the display system 835, the sensor system 830 may include a touch sensor system and/or a gesture sensor system proximate one or more displays of the display system 835. According to some such implementations, the control system 810 may be configured for controlling the display system 835 to present one or more graphical user interfaces (GUIs).

According to some such examples the apparatus 800 may be, or may include, a smart audio device. In some such implementations the apparatus 800 may be, or may include, a wakeword detector. For example, the apparatus 800 may be, or may include, a virtual assistant.

Some aspects of present disclosure include a system or device configured (e.g., programmed) to perform one or more examples of the disclosed methods, and a tangible computer readable medium (e.g., a disc) which stores code for implementing one or more examples of the disclosed methods or steps thereof. For example, some disclosed systems can be or include a programmable general purpose processor, digital signal processor, or microprocessor, programmed with software or firmware and/or otherwise configured to perform any of a variety of operations on data, including an embodiment of disclosed methods or steps thereof. Such a general purpose processor may be or include a computer system including an input device, a memory, and a processing subsystem that is programmed (and/or otherwise configured) to perform one or more examples of the disclosed methods (or steps thereof) in response to data asserted thereto.

Some embodiments may be implemented as a configurable (e.g., programmable) digital signal processor (DSP) that is configured (e.g., programmed and otherwise configured) to perform required processing on audio signal(s), including performance of one or more examples of the disclosed methods. Alternatively, embodiments of the disclosed systems (or elements thereof) may be implemented as a general purpose processor (e.g., a personal computer (PC) or other computer system or microprocessor, which may include an input device and a memory) which is programmed with software or firmware and/or otherwise configured to perform any of a variety of operations including one or more examples of the disclosed methods. Alternatively, elements of some embodiments of the inventive system are implemented as a general purpose processor or DSP configured (e.g., programmed) to perform one or more examples of the disclosed methods, and the system also includes other elements (e.g., one or more loudspeakers and/or one or more microphones). A general purpose processor configured to perform one or more examples of the disclosed methods may be coupled to an input device (e.g., a mouse and/or a keyboard), a memory, and a display device.

Another aspect of present disclosure is a computer readable medium (for example, a disc or other tangible storage medium) which stores code for performing (e.g., coder executable to perform) one or more examples of the disclosed methods or steps thereof.

While specific embodiments of the present disclosure and applications of the disclosure have been described herein, it will be apparent to those of ordinary skill in the art that many variations on the embodiments and applications described herein are possible without departing from the scope of the disclosure described and claimed herein. It should be understood that while certain forms of the disclosure have been shown and described, the disclosure is not to be limited to the specific embodiments described and shown or the specific methods described.

**Claims**

1. A method for reverberation suppression, comprising:

   receiving (302) an input audio signal (206), wherein the input audio signal (206) comprises a plurality of frames;
   calculating (304) an initial reverberation suppression gain for the input audio signal (206) for at least one frame of the plurality of frames;
   calculating (306) an adjusted reverberation suppression gain for the at least one frame of the input audio signal (206), wherein the adjusted reverberation suppression gain is based on the initial reverberation suppression gain, and wherein the adjusted reverberation suppression gain adjusts a decay of the reverberation suppression gain;
   generating (312) an output audio signal by applying the adjusted reverberation suppression gain to the at least one frame of the input audio signal (206),
   wherein calculating the adjusted reverberation suppression gain comprises:

   calculating (404) a reverberation intensity for the at least one frame of the plurality of frames of the input audio signal (206);
   calculating (406) an attack phase smoothing time constant of the decay of the reverberation suppression gain and a release phase smoothing time constant of the decay for the at least one frame of the plurality of frames of the input audio signal (206) that is proportional to the calculated reverberation intensity; and
   calculating (410) the adjusted decay of the reverberation suppression gain based on the calculated attack phase smoothing time constant and the release phase smoothing time constant for the at least one frame of the plurality of frames of the input audio signal (206).

2. The method of claim 1, wherein calculating the time constant of the decay of the reverberation suppression gain for the at least one frame of the plurality of frames of the input audio signal (206) is based on a determination of whether said frame of the input audio signal (206) corresponds to an attack phase of reverberant speech or a release phase of reverberant speech, wherein the calculated smoothing time constant is an attack phase smoothing time constant if the input audio signal corresponds to an attack phase and a release phase smoothing time constant if the input audio signal corresponds to a release phase, wherein the attack phase smoothing time constant and the release phase smoothing time constant are each proportional to the calculated reverberation intensity.

3. The method of claims 1 or 2, wherein the calculated time constant is calculated for a plurality of frequency bands of the input audio signal (206),
   wherein the calculated time constant is smoothed across the plurality of frequency bands.

4. The method of any one of claims 1-3, wherein the adjusted reverberation suppression gain is combined with a calculated (308) second adjusted reverberation suppression gain applied to different frequency bands of the input audio signal based on the amount of room resonance detected in the input audio signal (206), and wherein calculating (308) the second adjusted reverberation suppression gain comprises:

   dividing (504) the input audio signal (206) into a plurality of frequency bands;
   for each frequency band of the plurality of frequency bands, calculating (508) an amount of room resonance present in the input audio signal (206) at the frequency band; and
   calculating (510) the second adjusted reverberation suppression gain for each frequency band based on the amount of room resonance present in the input audio signal at the frequency band.

5. The method of claim 4, wherein calculating the amount of room resonance present in the input audio signal at the frequency band comprises calculating (506) a Signal to Reverberant energy Ratio, SRR, for each frequency band.

6. The method of claim 5, wherein the amount of room resonance is calculated as greater than 0 for a frequency band of the plurality of frequency bands in response to determining that the SRR for the frequency band is below a threshold; and/or
   wherein the amount of room resonance of a frequency band of the plurality of frequency bands is calculated based on an activation function applied to the SRR at the frequency band.

7. The method of any one of claims 4-6, wherein the second adjusted reverberation suppression gain for each frequency band is based on:

   a scaled value of the amount of room resonance at each frequency band and for the at least one frame of the plurality of frames of the input audio signal (206); or
   a scaled value of an average amount of room resonance at each frequency band averaged across a plurality of frames of the input audio signal (206).

8. The method of any one of claims 1-7, wherein the adjusted reverberation suppression gain is combined with a calculated (310) third adjusted reverberation suppression gain that adjusts the loudness of the input audio signal (206) based on the effect of the initial reverberation suppression gain on the direct part of the input audio signal (206), and wherein calculating the third adjusted reverberation suppression gain comprises:

   selecting initial reverberation suppression gains for frames of the input audio signal (206) that exceed a threshold; and
   estimating statistics associated with the direct part of the input audio signal (206) for the frames of the input audio signal (206) based on the selected initial reverberation suppression gains, wherein the third adjusted reverberation suppression gain is based on the estimated statistics associated with the direct part of the input audio signal (206).

9. The method of claim 8, further comprising:
   calculating (606) smoothed initial reverberation suppression gains based on the selected initial reverberation suppression gains, wherein the estimated statistics associated with the direct part of the input audio signal (206) comprise estimated (608) gains applied to the direct part of the input audio signal (206), and wherein the estimated gains applied to the direct part of the input audio signal (206) are based on the smoothed initial reverberation suppression gains.

10. The method of claim 9, wherein calculating smoothed initial reverberation suppression gains comprises applying a one-pole smoothing to the selected initial reverberation suppression gains.

11. The method of one of claims 9 or 10, wherein the third adjusted reverberation suppression gain is calculated by comparing the estimated gains applied to the direct part of the input audio signal (206) to a target gain.

12. The method of claim 8, wherein the estimated statistics associated with the direct part of the input audio signal comprise smoothed loudness levels of the direct part of the audio signal for the frames of the input audio signal based on the selected initial reverberation suppression gains.

13. The method of claim 12, wherein the third adjusted reverberation suppression gain is calculated by comparing (658) the smoothed loudness levels of the direct part of the input audio signal to a target loudness level.

14. An apparatus configured for implementing the method of any one of claims 1-13.

15. One or more non-transitory media having software stored thereon, the software including instructions for controlling one or more devices to perform the method of any one of claims 1-13.

**Patentansprüche**

1. Verfahren zur Hallunterdrückung, umfassend:

   Empfangen (302) eines Eingangsaudiosignals (206), wobei das Eingangsaudiosignal (206) eine Vielzahl von Frames umfasst;
   Berechnen (304) einer anfänglichen Hallunterdrückungsverstärkung für das Eingangsaudiosignal (206) für mindestens einen Frame von der Vielzahl von Frames;
   Berechnen (306) einer angepassten Hallunterdrückungsverstärkung für den mindestens einen Frame des Eingangsaudiosignals (206), wobei die angepasste Hallunterdrückungsverstärkung auf der anfänglichen Hallunterdrückungsverstärkung basiert und wobei die angepasste Hallunterdrückungsverstärkung ein Ausschwingen der Hallunterdrückungsverstärkung anpasst;

Erzeugen (312) eines Ausgangsaudiosignals durch Anwenden der angepassten Hallunterdrückungsverstärkung auf mindestens einen Frame des Eingangsaudiosignals (206),

wobei Berechnen der angepassten Hallunterdrückungsverstärkung Folgendes umfasst: Berechnen (404) einer Hallintensität für den mindestens einen Frame von der Vielzahl von Frames des Eingangsaudiosignals (206);

Berechnen (406) einer Anstiegsphasen-Glättungszeitkonstante des Abklingens der Hallunterdrückungsverstärkung und einer Abfallphasen-Glättungszeitkonstante des Ausschwingens für den mindestens einen Frame von der Vielzahl von Frames des Eingangsaudiosignals (206), die proportional zur berechneten Hallintensität ist; und

Berechnen (410) des angepassten Ausschwingens der Hallunterdrückungsverstärkung auf der Grundlage der berechneten Anstiegsphasen-Glättungszeitkonstante und der Abfallphasen-Glättungszeitkonstante für den mindestens einen Frame von der Vielzahl von Frames des Eingangsaudiosignals (206).

2. Verfahren nach Anspruch 1, wobei Berechnen der Zeitkonstante des Ausschwingens der Hallunterdrückungsverstärkung für den mindestens einen Frame von der Vielzahl von Frames des Eingangsaudiosignals (206) auf einer Feststellung beruht, ob der Frame des Eingangsaudiosignals (206) einer Anstiegsphase hallbehafteter Sprache oder einer Abfallphase hallbehafteter Sprache entspricht, wobei die berechnete Glättungszeitkonstante eine Anstiegsphasen-Glättungszeitkonstante ist, falls das Eingangsaudiosignal einer Anstiegsphase entspricht, und eine Abfallphasen-Glättungszeitkonstante, falls das Eingangsaudiosignal einer Abfallphase entspricht, wobei die Anstiegsphasen-Glättungszeitkonstante und die Abfallphasen-Glättungszeitkonstante jeweils proportional zur berechneten Hallintensität sind.

3. Verfahren nach Anspruch 1 oder 2, wobei die berechnete Zeitkonstante für eine Vielzahl von Frequenzbändern des Eingangsaudiosignals (206) berechnet wird, wobei die berechnete Zeitkonstante über die Vielzahl von Frequenzbändern geglättet wird.

4. Verfahren nach einem der Ansprüche 1-3, wobei die angepasste Hallunterdrückungsverstärkung mit einer berechneten (308) zweiten angepassten Hallunterdrückungsverstärkung kombiniert wird, die auf unterschiedliche Frequenzbänder des Eingangsaudiosignals auf Grundlage des im Eingangsaudiosignal (206) festgestellten Raumresonanzanteils angewendet wird, und wobei Berechnen (308) der zweiten angepassten Hallunterdrückungsverstärkung Folgendes umfasst:

Aufteilen (504) des Eingangsaudiosignals (206) in eine Vielzahl von Frequenzbändern;

für jedes Frequenzband von der Vielzahl von Frequenzbändern, Berechnen (508) eines im Eingangsaudiosignal (206) bei dem Frequenzband vorhandenen Raumresonanzanteils und

Berechnen (510) der zweiten angepassten Hallunterdrückungsverstärkung für jedes Frequenzband auf Grundlage des im Eingangsaudiosignal bei dem Frequenzband vorhandenen Raumresonanzanteils.

5. Verfahren nach Anspruch 4, wobei Berechnen des Raumresonanzanteils im Eingangssignal bei dem Frequenzband Berechnen (506) eines Signal-zu-Hall-Energieverhältnisses, SRR, für jedes Frequenzband umfasst.

6. Verfahren nach Anspruch 5, wobei der Raumresonanzanteil für ein Frequenzband von der Vielzahl der Frequenzbänder als größer als 0 berechnet wird, als Reaktion auf ein Feststellen, dass das SRR für das Frequenzband unterhalb eines Schwellenwerts liegt; und/oder wobei der Raumresonanzanteil eines Frequenzbandes von der Vielzahl von Frequenzbändern auf Grundlage einer Aktivierungsfunktion berechnet wird, die auf das SRR bei dem Frequenzband angewendet wird.

7. Verfahren nach einem der Ansprüche 4-6, wobei die zweite angepasste Hallunterdrückungsverstärkung für jedes Frequenzband auf Folgendem beruht:

einem skalierten Wert des Raumresonanzanteils bei jedem Frequenzband und für den mindestens einen Frame von der Vielzahl von Frames des Eingangsaudiosignals (206) oder einem skalierten Wert eines durchschnittlichen Raumresonanzanteils bei jedem Frequenzband, gemittelt über eine Vielzahl von Frames des Eingangs-Audiosignals (206).

8. Verfahren nach einem der Ansprüche 1-7, wobei die angepasste Hallunterdrückungsverstärkung mit einer berechneten (310) dritten angepassten Hallunterdrückungsverstärkung kombiniert wird, welche die Lautstärke des Eingangsaudiosignals (206) auf Grundlage der Wirkung der anfänglichen Hallunterdrückungsverstärkung auf den direkten Teil des Eingangsaudiosignals (206) anpasst, und wobei Berechnen der dritten angepassten Hallunterdrückungsverstärkung Folgendes umfasst:

Auswählen anfänglicher Hallunterdrückungsverstärkungen für Frames des Eingangsaudiosignals (206), die einen Schwellenwert überschreiten; und

Schätzen der Statistiken, die mit dem direkten Teil des Eingangsaudiosignals (206) für die Frames des Eingangsaudiosignals (206) verknüpft sind, auf Grundlage der ausgewählten anfänglichen Hallunterdrückungsverstärkungen, wobei die dritte angepasste Hallunterdrückungsverstärkung auf den geschätzten Statistiken beruht, die mit dem direkten Teil des Eingangsaudiosignals (206) verknüpft sind.

9. Verfahren nach Anspruch 8, weiter umfassend:
Berechnen (606) geglätteter anfänglicher Hallunterdrückungsverstärkungen auf Grundlage der ausgewählten anfänglichen Hallunterdrückungsverstärkungen, wobei die geschätzten Statistiken, die mit dem direkten Teil des Eingangsaudiosignals (206) verknüpft sind, geschätzte (608) Verstärkungen umfassen, die auf den direkten Teil des Eingangsaudiosignals (206) angewendet werden, und wobei die geschätzten Verstärkungen, die auf den direkten Teil des Eingangsaudiosignals (206) angewendet werden, auf den geglätteten anfänglichen Hallunterdrückungsverstärkungen beruhen.

10. Verfahren nach Anspruch 9, wobei das Berechnen der geglätteten anfänglichen Hallunterdrückungsverstärkungen Anwenden einer einpoligen Glättung auf die ausgewählten anfänglichen Hallunterdrückungsverstärkungen umfasst.

11. Verfahren nach einem der Ansprüche 9 oder 10, wobei die dritte angepasste Hallunterdrückungsverstärkung durch Vergleichen der auf den direkten Teil des Eingangsaudiosignals (206) angewendeten geschätzten Verstärkungen mit einer Zielverstärkung berechnet wird.

12. Verfahren nach Anspruch 8, wobei die geschätzten Statistiken, die mit dem direkten Teil des Eingangsaudiosignals verknüpft sind, geglättete Lautstärkepegel des direkten Teils des Audiosignals für die Frames des Eingangsaudiosignals auf Grundlage der ausgewählten anfänglichen Hallunterdrückungsverstärkungen umfassen.

13. Verfahren nach Anspruch 12, wobei die dritte angepasste Hallunterdrückungsverstärkung durch Vergleichen (658) der geglätteten Lautstärkepegel des direkten Teils des Eingangsaudiosignals mit einem Ziellautstärkepegel berechnet wird.

14. Einrichtung, die zum Umsetzen des Verfahrens nach einem der Ansprüche 1-13 konfiguriert ist.

15. Ein oder mehrere nichtflüchtige Medien, die darauf gespeicherte Software aufweisen, wobei die Software Anweisungen zum Steuern einer oder mehrerer Vorrichtungen zum Durchführen des Verfahrens nach einem der Ansprüche 1-13 einschließt.

## Revendications

1. Procédé de suppression de réverbération, comprenant :

la réception (302) d'un signal audio d'entrée (206), dans lequel le signal audio d'entrée (206) comprend une pluralité de trames ;
le calcul (304) d'un gain de suppression de réverbération initial pour le signal audio d'entrée (206) pour au moins une trame de la pluralité de trames ;
le calcul (306) d'un gain de suppression de réverbération ajusté pour au moins une trame du signal audio d'entrée (206), dans lequel le gain de suppression de réverbération ajusté est basé sur le gain de suppression de réverbération initial, et dans lequel le gain de suppression de réverbération ajusté ajuste une décroissance du gain de suppression de réverbération ;
la génération (312) d'un signal audio de sortie en appliquant le gain de suppression de réverbération ajusté à au moins une trame du signal audio d'entrée (206),
dans lequel le calcul du gain de suppression de réverbération ajusté comprend : le calcul (404) d'une intensité de réverbération pour l'au moins une trame de la pluralité de trames du signal audio d'entrée (206) ;
le calcul (406) d'une constante de temps de lissage de phase d'attaque de la décroissance du gain de suppression de réverbération et d'une constante de temps de lissage de phase de relâchement de la décroissance pour l'au moins une trame parmi la pluralité de trames du signal audio d'entrée (206) qui est proportionnelle à l'intensité de réverbération calculée ; et

le calcul (410) de la décroissance ajustée du gain de suppression de réverbération basée sur la constante de temps de lissage de la phase d'attaque calculée et la constante de temps de lissage de la phase de relâchement pour l'au moins une trame de la pluralité de trames du signal audio d'entrée (206).

2. Procédé selon la revendication 1, dans lequel le calcul de la constante de temps de décroissance du gain de suppression de réverbération pour l'au moins une trame de la pluralité de trames du signal audio d'entrée (206) est basé sur la détermination visant à savoir si ladite trame du signal audio d'entrée (206) correspond à une phase d'attaque ou à une phase de relâchement de la parole réverbérée, dans lequel la constante de temps de lissage calculée est une constante de temps de lissage de phase d'attaque si le signal audio d'entrée correspond à une phase d'attaque et une constante de temps de lissage de phase de relâchement si le signal audio d'entrée correspond à une phase de relâchement, dans lequel la constante de temps de lissage de phase d'attaque et la constante de temps de lissage de phase de relâchement sont chacune proportionnelles à l'intensité de réverbération calculée.

3. Procédé selon les revendications 1 ou 2, dans lequel la constante de temps calculée est calculée pour une pluralité de bandes de fréquences du signal audio d'entrée (206),

dans lequel la constante de temps calculée est lissée sur plusieurs bandes de fréquences.

4. Procédé selon l'une quelconque des revendications 1-3, dans lequel le gain de suppression de réverbération ajusté est combiné à un deuxième gain de suppression de réverbération ajusté calculé (308) appliqué à différentes bandes de fréquences du signal audio d'entrée sur la base du niveau de résonance de la pièce détecté dans le signal audio d'entrée (206), et dans lequel le calcul (308) du deuxième gain de suppression de réverbération ajusté comprend :

la division (504) du signal audio d'entrée (206) en une pluralité de bandes de fréquences ;
pour chaque bande de fréquence de la pluralité de bandes de fréquence, le calcul (508) d'un niveau de résonance de la pièce présent dans le signal audio d'entrée (206) à la bande de fréquence ; et
le calcul (510) du deuxième gain de suppression de réverbération ajusté pour chaque bande de fréquence sur la base du niveau de résonance de la pièce présent dans le signal audio d'entrée à la bande de fréquence.

5. Procédé selon la revendication 4, dans lequel le calcul du niveau de résonance de la pièce présent dans le signal audio d'entrée à la bande de fréquence comprend le calcul (506) d'un rapport signal sur énergie réverbérée, SRR, pour chaque bande de fréquence.

6. Procédé selon la revendication 5, dans lequel le niveau de résonance de la pièce est calculé comme supérieur à 0 pour une bande de fréquence parmi la pluralité de bandes de fréquence en réponse à la détermination que le SRR pour la bande de fréquence est inférieur à un seuil ; et/ou

dans lequel le niveau de résonance de la pièce d'une bande de fréquence parmi la pluralité de bandes de fréquence est calculé sur la base d'une fonction d'activation appliquée au SRR à la bande de fréquence.

7. Procédé selon l'une quelconque des revendications 4-6, dans lequel le deuxième gain de suppression de réverbération ajusté pour chaque bande de fréquence est basé sur :

une valeur mise à l'échelle du niveau de résonance de la pièce à chaque bande de fréquence et pour au moins une trame parmi la pluralité de trames du signal audio d'entrée (206) ; ou
une valeur mise à l'échelle d'un niveau moyen de résonance de la pièce à chaque bande de fréquence moyennée sur une pluralité de trames du signal audio d'entrée (206).

8. Procédé selon l'une quelconque des revendications 1-7, dans lequel le gain de suppression de réverbération ajusté est combiné à un troisième gain de suppression de réverbération ajusté calculé (310) qui ajuste le volume sonore du signal audio d'entrée (206) sur la base de l'effet du gain de suppression de réverbération initial sur la partie directe du signal audio d'entrée (206), et dans lequel le calcul du troisième gain de suppression de réverbération ajusté comprend :

la sélection des gains initiaux de suppression de réverbération pour les trames du signal audio d'entrée (206) qui dépassent un seuil ; et
l'estimation des statistiques associées à la partie directe du signal audio d'entrée (206) pour les trames du signal audio d'entrée (206) sur la base des gains de suppression de réverbération initiaux sélectionnés, dans lequel le troisième gain de suppression de réverbération ajusté est basé sur les statistiques estimées associées à la partie directe du signal audio d'entrée (206).

9. Procédé selon la revendication 8, comprenant en outre :
le calcul des gains de suppression de réverbération initiaux lissés (606) basé sur les gains de suppression de réverbération initiaux sélectionnés, dans lequel les statistiques estimées associées à la partie directe du signal audio d'entrée (206) comprennent des gains estimés (608) appliqués à la partie directe du signal audio d'entrée (206), et dans lequel les gains estimés appliqués à la partie directe du signal audio d'entrée (206) sont basés sur les gains de suppression de réverbération initiaux lissés.

10. Procédé selon la revendication 9, dans lequel le calcul des gains de suppression de réverbération initiaux lissés comprend l'application d'un lissage à un pôle aux gains de suppression de réverbération initiaux sélectionnés.

11. Procédé selon l'une des revendications 9 ou 10, dans lequel le troisième gain de suppression de réverbération ajusté est calculé en comparant les gains estimés appliqués à la partie directe du signal audio d'entrée (206) à un gain cible.

12. Procédé selon la revendication 8, dans lequel les statistiques estimées associées à la partie directe du signal audio d'entrée comprennent des niveaux de volume sonore lissés de la partie directe du signal audio pour les trames du signal audio d'entrée sur la base des gains de suppression de réverbération initiaux sélectionnés.

13. Procédé selon la revendication 12, dans lequel le troisième gain de suppression de réverbération ajusté est calculé en comparant (658) les niveaux de volume sonore lissés de la partie directe du signal audio d'entrée à un niveau de volume sonore cible.

14. Appareil configuré pour mettre en œuvre le procédé selon l'une quelconque des revendications 1-13.

15. Un ou plusieurs supports non transitoires sur lesquels est stocké un logiciel, le logiciel incluant des instructions pour commander un ou plusieurs dispositifs pour réaliser le procédé selon l'une quelconque des revendications 1-13.

FIG. 1A

FIG. 1B

EP 4 305 621 B1

200

204

INPUT AUDIO
SIGNAL

206

INITIAL
REVERBERATION
SUPPRESSION

202

INPUT AUDIO SIGNAL

206

INPUT
SUPPRESSION GAIN

208

REVERBERATION
SUPPRESSION
ADJUSTMENT

DYNAMIC DECAY
CONTROL

204a

SPECTRAL COLOR
ADJUSTMENT

204b

LOUDNESS
COMPENSATION

204c

ADJUSTED
DEREVERBERATED
AUDIO SIGNAL

210

FIG. 2

300

302 — RECEIVE AN INPUT AUDIO SIGNAL
THAT INCLUDES A SERIES OF FRAMES

304 — CALCULATE AN INITIAL REVERBERATION
SUPPRESSION GAIN FOR THE FRAMES

306 — CALCULATE A FIRST ADJUSTED GAIN
BASED ON REVERBERATION TIME OF
REVERBERATION DETECTED IN THE
INPUT AUDIO SIGNAL

308 — CALCULATE A SECOND ADJUSTED GAIN
BASED ON A DETERMINED AMOUNT OF
ROOM RESONANCE ASSOCIATED WITH
THE INPUT AUDIO SIGNAL

310 — CALCULATE A THIRD ADJUSTED GAIN
BASED ON GAINS APPLIED TO A DIRECT
PART OF THE INPUT AUDIO SIGNAL IN
THE INITIAL REVERBERATION GAIN

312 — GENERATE AN OUTPUT AUDIO SIGNAL BY
APPLYING A COMBINATION OF THE FIRST
ADJUSTED GAIN, SECOND ADJUSTED GAIN,
AND/OR THIRD ADJUSTED GAIN TO EACH
FRAME OF THE INPUT AUDIO SIGNAL

FIG. 3

400

402 — RECEIVE AN INPUT AUDIO SIGNAL AND INITIAL REVERBERATION SUPPRESSION GAINS FOR FRAMES OF THE INPUT AUDIO SIGNAL

404 — CALCULATE REVERBERATION INTENSITY FOR FRAMES OF THE INPUT AUDIO SIGNAL

406 — CALCULATE AN ATTACK PHASE SMOOTHING TIME CONSTANT AND A RELEASE PHASE SMOOTHING TIME CONSTANT FOR FRAMES OF THE INPUT AUDIO SIGNAL

408 — CALCULATE AN ATTACK PHASE SMOOTHING FACTOR AND A RELEASE PHASE SMOOTHING FACTOR FOR FRAMES OF THE AUDIO SIGNAL

410 — CALCULATE AN ADJUSTED REVERBERATION SUPPRESSION GAIN BASED ON THE INITIAL REVERBERATION SUPPRESSION GAIN, THE ATTACK PHASE SMOOTHING FACTOR, AND THE RELEASE PHASE SMOOTHING FACTOR FOR FRAMES OF THE INPUT AUDIO SIGNAL

FIG. 4

500

502 — RECEIVE AN INPUT AUDIO SIGNAL AND/OR AN INITIAL REVERBERATION SUPPRESSION GAIN FOR FRAMES OF THE INPUT AUDIO SIGNAL

504 — DIVIDE THE INPUT AUDIO SIGNAL INTO FREQUENCY BANDS

506 — CALCULATE A SIGNAL TO REVERBERANT ENERGY RATIO (SRR) FOR THE FREQUENCY BANDS AND FOR THE FRAMES OF THE INPUT AUDIO SIGNAL

508 — DETERMINE WHETHER ROOM RESONANCE IS PRESENT FOR THE FREQUENCY BANDS AND FOR THE FRAMES OF THE INPUT AUDIO SIGNAL

510 — CALCULATE AN ADJUSTED REVERBERATION SUPPRESSION GAIN FOR THE FREQUENCY BANDS AND FOR THE FRAMES BASED ON THE ROOM RESONANCE

FIG. 5

EP 4 305 621 B1

**600**

**602** — RECEIVE AN INPUT AUDIO SIGNAL AND/OR AN INITIAL REVERBERATION SUPPRESSION GAIN FOR FRAMES OF THE INPUT AUDIO SIGNAL

↓

**604** — SELECT INITIAL REVERBERATION SUPPRESSION GAINS THAT CORRESPOND TO A DIRECT PART OF THE INPUT AUDIO SIGNAL

↓

**606** — CALCULATE SMOOTHED SELECTED SUPPRESSION GAINS APPLIED TO THE DIRECT PART OF THE INPUT AUDIO SIGNAL

↓

**608** — ESTIMATE GAINS APPLIED TO THE DIRECT PART OF THE INPUT AUDIO SIGNAL BASED ON THE SMOOTHED SELECTED INITIAL REVERBERATION SUPPRESSION GAINS

↓

**610** — CALCULATE AN ADJUSTED REVERBERATION SUPPRESSION GAIN BASED ON THE ESTIMATED GAINS APPLIED TO THE DIRECT PART OF THE INPUT AUDIO SIGNAL AND A TARGET GAIN

**FIG. 6A**

---

**650**

**652** — RECEIVE AN INPUT AUDIO SIGNAL AND/OR AN INITIAL REVERBERATION SUPPRESSION GAIN FOR FRAMES OF THE INPUT AUDIO SIGNAL

↓

**654** — SELECT INITIAL REVERBERATION SUPPRESSION GAINS THAT CORRESPOND TO A DIRECT PART OF THE INPUT AUDIO SIGNAL

↓

**656** — CALCULATE SMOOTHED LOUDNESS LEVELS FOR FRAMES OF THE INPUT AUDIO SIGNAL BASED ON THE SELECTED INITIAL REVERBERATION SUPPRESSION GAINS

↓

**658** — ESTIMATE LOUDNESS LEVELS OF THE DIRECT PART OF THE INPUT AUDIO SIGNAL BASED ON THE SMOOTHED LOUDNESS LEVELS

↓

**660** — CALCULATE AN ADJUSTED REVERBERATION SUPPRESSION GAIN BASED ON THE LOUDNESS LEVELS OF THE DIRECT PART OF THE INPUT AUDIO SIGNAL AND A TARGET LOUDNESS

**FIG. 6B**

700

702 — RECEIVE AN INPUT AUDIO SIGNAL

704 — DIVIDE THE INPUT AUDIO SIGNAL INTO FREQUENCY BANDS

706 — CALCULATE A SMOOTHED PEAK ENERGY AND A SMOOTHED SIGNAL ENERGY FOR THE FREQUENCY BANDS

708 — CALCULATE A SIGNAL TO REVERBERANT ENERGY RATIO (SRR) FOR THE FREQUENCY BANDS BASED ON A RATIO OF THE SMOOTHED PEAK ENERGY TO THE SMOOTHED SIGNAL ENERGY

710 — CALCULATE A SMOOTHED SRR FOR THE FREQUENCY BANDS

FIG. 7

800

INTERFACE SYSTEM — 805

CONTROL SYSTEM — 810

MEMORY SYSTEM — 815

MICROPHONE SYSTEM — 820

LOUDSPEAKER SYSTEM — 825

SENSOR SYSTEM — 830

DISPLAY SYSTEM — 835

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021080214 W
- US 63171620
- EP 21174907
- EP 2573768 A2
- EP 1667416 A2
- EP 2624254 A1
- US 9520 A
- US 140 A